# EUROPÄISCHE PATENTANMELDUNG

(11) **EP 4 310 034 A2**
(43) Veröffentlichungstag der Anmeldung: **24.01.2024**
(21) Anmeldenummer: 23174650.4
(22) Anmeldetag: 22.05.2023
(51) Int. Cl.: B65G 47/61, B65G 65/00, B65B 61/06, B65B 69/00, B65D 75/42, B65G 1/137, B65G 47/44

(54) **VORRICHTUNG UND VERFAHREN ZUM BELADEN VON TRANSPORTBEHÄLTERN**

(30) Priorität: 31.05.2022 CH 657222022; 02.09.2022 CH 1030222022
(71) Anmelder: FERAG AG, 8340 Hinwil (CH)
(72) Erfinder: Bretz, Markus, 8704 Herrliberg (CH)
(74) Vertreter: IPrime Rentsch Kaelin AG

(57) **Zusammenfassung**

Eine Vorrichtung (6) zum Einbringen von Liegewareneinheiten (2, 3, 31) in einen Transportbehälter (8, 81) umfasst ein Einbringmodul (63) zum Einbringen von Liegewareneinheiten (2, 3, 31) in einen Transportbehälter (8, 81), ein Zufördermodul (61) zur Zuförderung von Liegewareneinheiten (2, 3, 31) zu dem Einbringmodul (63), und ein erstes Identifikationsmodul (65) zum Identifizieren von Liegewareneinheiten (2, 3, 31). Das Zufördermodul (61) umfasst eine Liegefördervorrichtung (613), mit welchem Liegewareneinheiten entlang eines Förderpfades förderbar sind. Das Identifikationsmodul (65) ist dazu eingerichtet, die Identität einer Liegewareneinheit zu bestimmen.

## Beschreibung

Die vorliegende Patentanmeldung nimmt die Prioritäten der schweizerischen Patentanmeldungen CH000657/2022 vom 31. Mai 2022 und CH001030/2022 vom 2. September 2022 in Anspruch, deren Inhalt durch Bezugnahme hierin aufgenommen wird.

### Gebiet der Technik

Die Erfindung betrifft Vorrichtungen und Verfahren zum Einbringen von Liegewareneinheiten in einen Transportbehälter.

### Technologischer Hintergrund

Wichtige Themen der Intralogistik sind unter anderem das Bereithalten von Wareneinheiten, und das Kommissionieren von Wareneinheiten, also das Zusammenstellen von verschiedenen Wareneinheiten für eine Bestellung. Dabei besteht das Bedürfnis nach einer Automatisierung von Abläufen in Intralogistik-Systemen.

Fördersysteme mit automatisch förderbaren Transportbehältern haben sich insbesondere in Bezug auf heterogene Wareneinheiten als effiziente Lösung für automatische Lagersysteme und Kommissionierungssysteme etabliert. In automatisierten Warenlagern, weitläufigen Produktionsstätten und ganz allgemein bei der Förderung und dem Transport von Waren haben sich insbesondere Hängefördersysteme als ein effizientes Mittel für den Transport, die Zwischenpufferung, aber auch die langfristige Lagerung verschiedener Arten von Waren erwiesen.

Bei Hängefördersystemen werden die Waren entweder auf geeignete Weise direkt an einzelnen Förderelementen eines Fördersystems aufgehängt, oder in entsprechende Transportbehälter wie beispielsweise Transporttaschen eingebracht, die wiederum hängend an den Förderelementen gelagert sind. Hängefördersysteme können als Transportkettenanlagen realisiert sein, bei welchen eine Vielzahl von Förderelementen Glieder einer Kette bilden, die entlang eines Förderpfads bewegt wird. Ebenfalls bekannt sind schwerkraftgeförderte Fördersysteme, bei welchen sich einzelne Förderelemente auf entsprechenden Laufschienen bewegen. Solche schwerkraftgeförderte, schienengeführte Fördersysteme sind beispielsweise aus US 2017/275826 A1, US 2018/215547 A1 und US 2017/282317 A1 bekannt.

US 2021/0395017 A1 zeigt dabei insbesondere eine Vorrichtung zum automatischen Bereitstellen von Hängefördertaschen in einer Konfiguration, in welcher die Hängefördertaschen quer zur Förderrichtung befüllt werden können.

Insbesondere die stetig zunehmenden Volumina im Online-Handel erfordern bei Händlern, Zulieferern und Logistikunternehmen einen effizienten Umgang mit den zu verarbeitenden Waren, insbesondere in Bezug auf die Herstellung, Bereitstellung und Lagerung der Artikel, sowie die Kommissionierung und den Transport der Artikel zum Kunden. Hängefördersysteme mit Transportbehältern sind besonders geeignet für die effiziente Förderung von heterogenen Waren-Einheiten, wie beispielsweise Werkstücken in Produktionsprozessen, Ersatzteilen, Konsumgütern wie Büchern, Kleidern, Schuhen, etc. So können beispielsweise in Logistikzentren von Versandhandelsfirmen Hängefördersysteme verwendet werden, um eine Vielzahl von Waren-Einheiten verschiedener Grösse und Gewicht einzulagern, und Gruppen von Artikeln gemäss den jeweiligen Kundenaufträgen zu kommissionieren, also gemäss Vorgaben zu Warengruppen zusammenzustellen, und für den Versand bereitzustellen.

In dieser Beschreibung wird der Begriff Waren-Einheiten bzw. Ware synonym verwendet, und kann insbesondere einzelne Stückgüter, aber auch verpackte Waren wie beispielsweise Pakete umfassen, und ganz generell einzeln handhabbare Gegenstände.

Ein für Hängefördersysteme relevanter Aspekt ist das einfache, reibungslose und effiziente Einbringen von Waren-Einheiten in die leeren Transportelemente, beispielsweise Transporttaschen, und das einfache, reibungslose und effiziente Entnehmen der Waren-Einheiten aus den Transportelementen. Ein manuelles Einbringen der Waren-Einheiten in die Transportelemente bzw. Entnehmen der Waren-Einheiten aus den Transportelementen erlaubt dabei eine flexible Handhabung verschiedener Waren-Einheiten, ist jedoch langsam und kostenintensiv. Entsprechend wurden teilautomatisierte oder vollautomatisierte Systeme entwickelt.

Beispiele solcher automatisierter Beladungssysteme und/oder Entladungssysteme für in einer Hängeförderanlage transportierte Transporttaschen sind beispielsweise gezeigt in EP 2130968 A1, US 2018/072511 A1, US 2018/0208407 A1, EP 2418160 A1, US 2019/0367282 A1, US 2021/0171292 A1, WO 2018/078098 A1, US 2017/0369250 A1 und US 2021/0053763 A1.

Damit Transportbehälter effizient und störungsfrei mit Wareneinheiten befüllt werden können, sollten die Wareneinheiten eine stabile Geometrie aufweisen. Bei wenig formstabilen Waren wie Kleidungsstücken kann dies beispielsweise erreicht werden, indem diese gefaltet in einer Plastikfolie verpackt werden. Die Verwendung von solchen Plastikverpackungen steht jedoch zunehmend in der Kritik, zum einen aufgrund des Verbrauchs von wertvollen Ressourcen, und zum anderen wegen der Umweltverschmutzung bei ungeeigneter Entsorgung des Verpackungsmaterials.

Das Befüllen von Transportbehältern mit Wareneinheiten weist in der Regel mindestens einen manuellen Arbeitsschritt auf, nämlich beim Vereinzeln der Wareneinheiten. Wareneinheiten werden manuell von einem Stapel oder aus einem Behälter entnommen und einzeln entweder direkt in bereitgestellte Transportbehälter oder in eine entsprechende Befüll-Vorrichtung eingebracht. Der Einsatz von Roboter-Systemen ist möglich, aber für diesen Zweck wenig kosteneffizient.

Um die Identifikation von Objekten, insbesondere Wareneinheiten, in einem Intralogistiksystem zu ermöglichen, können die Wareneinheiten mit auslesbaren Datenelementen versehen werden, welche den Warentyp oder eine eindeutige Identifikationsnummer beinhalten. Beispielsweise können optisch auslesbare Datenelemente in Form von Barcodes oder zweidimensionalen QR-Codes auf einem Objekt angebracht werden, die dann mit einem Barcode-Scanner oder einer Kamera ausgelesen werden können.

Es können auch RFID (Radio-Frequency Identification)-Transponder auf oder in den Wareneinheiten angeordnet werden. Solche RFID-Elemente werden mit einer radiofrequenzbasierten RFID-Lesevorrichtung ausgelesen. RFID-Elemente aktiv oder passiv ausgestaltet sein. Es sind auf RFID-Elemente bekannt, in welche von aussen Daten beschrieben werden können. Passive RFID-Transponder, auch RFID-Tags genannt, werden durch ein von aussen eingestrahltes Radiofrequenz-Signal mit Energie versorgt. Sie sind kostengünstig und wartungsfrei.

RFID-Transponder können je nach verwendeter Technologie auch auf grössere Distanz ausgelesen werden, was bei räumlicher Nähe einer Vielzahl entsprechender Objekte die eindeutige Zuordnung eines empfangenen Signals, und damit der dazugehörigen Daten, zu einem bestimmten Objekt erschweren kann.

Aus DE 102010020531 A1 ist eine RFID-Lesevorrichtung bekannt, mit welcher ein RFID-Element eines Objekts ausgelesen werden kann, welche auf einem Horizontalförderer an einer seitlich angeordneten RFID-Leseeinheit vorbeigefördert wird. Die Sendeantenne weist eine Richtcharakteristik mit einem schwenkbaren Richtbereich auf. Die Signalintensität wird verwendet, um festzustellen, on ein empfangenes Signal von einem Objekt an der vorgesehenen Detektionsposition oder einer anderen Position dem auf Horizontalförderer stammt.

US 2012/0019364 A1 zeigt eine andere RFID-Leseeinheit zum Auslesen von Objekten auf einem Förderer, mit einem Auslesetunnel, durch welchen ein Horizontalförderer verläuft.

US 2015/0324621 A1 zeigt eine RFID-Leseeinheit mit einem Auslesetunnel und mit einer zusätzlichen Handantenne zur Nachidentifikation von Objekten auf einem Förderer, welche mit der stationären RFID-Leseeinheit verbunden ist.

US 9483672 B2 zeigt einen Rollenförderer mit einer RFID-Leseeinheit, die unterhalb des Rollenförderers angeordnet ist. Die Rollen des Rollenförderers sind nicht angetrieben. Der RF (Radiofrequenz)-Sender der RFID-Leseeinheit umfasst eine Anreger-Anreger, welche unterhalb von zwei Rollen des Rollenförderers über einer Grundplatte angeordnet ist. Die Metallachsen der beiden Rollen sind elektrisch zu einer geschlossenen Schlaufe verbunden. Es resultiert ein nach oben gerichtetes lokalisiertes RF-Feld, welches ein passives RFI D-Element an einem Objekt auf dem Rollenförderer anregen kann. Der Rollenförderer und die die RFID-Leseeinheit bilden eine integrale Einheit, deren Komponenten aufeinander abgestimmt sein müssen.

Es besteht allgemein das Bedürfnis nach Fortschritten in diesem Gebiet der Technik.

### Darstellung der Erfindung

Aufgabe der Erfindung ist es, ein Gebinde der eingangs erwähnten Art zur Verfügung zu stellen, das einige der oben erwähnten und andere Nachteile nicht aufweist. Insbesondere soll ein solches Gebinde es ermöglichen, Wareneinheiten effizient in Transportbehälter eines Fördersystems einer Intralogistik-Anlage einzubringen. Ein solches Gebinde soll vorteilhaft kostengünstig herstellbar sein, und es soll in der Handhabung wenig oder keine manuelle Arbeitsschritte erfordern.

Eine andere Aufgabe der Erfindung ist es, eine Vorrichtung und ein Verfahren zum Einbringen von Wareneinheiten in einen Transportbehälter bereitzustellen. Eine solche Vorrichtung beziehungsweise ein solches Verfahren sollen eine kosteneffiziente automatische Befüllung von Transportbehältern mit Wareneinheiten ermöglichen.

Diese und andere Aufgaben werden gelöst durch ein erfindungsgemässes Gebinde, ein erfindungsgemässes Verfahren zur Herstellung von Gebinden und erfindungsgemässe Vorrichtungen und Verfahren zum Einbringen von Wareneinheiten in Transportbehälter, gemäss den unabhängigen Ansprüchen. Weitere vorteilhafte Ausführungsformen und Ausführungsvarianten sind in den abhängigen Ansprüchen und der Beschreibung gegeben.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Ein erster Aspekt der Erfindung betrifft ein vorteilhaftes Gebinde für eine Mehrzahl von Wareneinheiten. Ein solches vorteilhaftes Gebinde umfasst einen Trägerstrang, auf welchem eine Mehrzahl von Packungseinheiten hintereinander in Reihe angeordnet ist.

Ein solches Gebinde erlaubt es, durch Fördern des Trägerstranges die Packungseinheiten in kontrollierter Art und Weise in Längsrichtung zu fördern und gegebenenfalls für eine weitere Bearbeitung bereitzustellen, ohne dass ein vorheriges Vereinzeln der Packungseinheiten notwendig wäre. Bei Bedarf kann dann eine einzelne Packungseinheit, oder auch mehrere hintereinander angeordnete Packungseinheiten, vom erfindungsgemäss Gebinde abgetrennt werden, so dass sie weiterverarbeitet werden können.

Insbesondere kann die Packungseinheit in einen bereitgestellten Transportbehälter eingebracht werden.

Der Trägerstrang und/oder die Packungseinheit kann aus Kunststoff, insbesondere aus einem abbaubaren Kunststoff oder einem rezyklierten Kunststoff, gefertigt sein. Alternativ können Trägerstrang und/oder Packungseinheit aus Papier oder Karton oder biologischem Fasermaterial gefertigt sein.

Vorteilhaft ist bei einem erfindungsgemässen Gebinde in mindestens einer Packungseinheit der Mehrzahl von Packungseinheiten mindestens eine Wareneinheit angeordnet.

Die Wareneinheiten in einer Packungseinheit eines solchen erfindungsgemässen Gebindes können insbesondere forminstabil sein. Die Wareneinheiten können zum Beispiel Kleidungsstücke sein.

Ein erfindungsgemässes Gebinde kann verschiedene Arten von Wareneinheiten umfassen, beispielsweise Kleidungsstücke verschiedener Grösse und/oder verschiedener Farbe.

Alternativ kann ein erfindungsgemässes Gebinde auch ohne Wareneinheiten bereitgestellt werden, um die Wareneinheiten zu einem späteren Zeitpunkt in die Packungseinheiten einbringen zu können.

Vorteilhaft ist bei einem erfindungsgemässen Gebinde der Trägerstrang bandförmig.

Alternativ oder zusätzlich besteht vorteilhaft bei einem erfindungsgemässen Gebinde der Trägerstrang aus einem flexiblen Material.

Bei einer vorteilhaften Ausführungsform eines erfindungsgemässen Gebindes ist beim Trägerstrang zwischen zwei benachbarten Packungseinheiten ein Scharnierelement angeordnet.

Solche Scharnierelemente dienen dazu, den Trägerstrang eines erfindungsgemässen Gebindes gezielt zusammenfalten zu können, beispielsweise in der Art eines Leporellos, was eine platzsparende Verpackung eines solchen Gebindes ermöglicht. Zudem ist ein solches erfindungsgemässes Gebinde flexibel, was eine automatische Förderung erleichtert.

Alternativ oder zusätzlich können bei einem erfindungsgemässen Gebinde beim Trägerstrang zwischen zwei benachbarten Packungseinheiten eine Sollbruchstelle oder eine örtlich begrenze mechanische Schwachstelle angeordnet sein.

Eine Sollbruchstelle vereinfacht das Abtrennen von Packungselementen vom Gebinde, indem die entsprechenden Sollbruchstellen dazu genutzt werden, ein Stück des Trägerstrangs mit der darauf angeordneten Packungseinheit abzutrennen. Es kann auch eine Mehrzahl von hintereinander angeordneten Packungseinheiten abgetrennt werden.

Eine örtlich begrenze mechanische Schwachstelle kann auch die Funktion eines Scharnierelementes übernehmen.

In einer weitere vorteilhaften Ausführungsform umfasst ein erfindungsgemässes Gebinde zwei oder mehr Trägerstränge, die parallel zueinander angeordnet sind.

Eine solche Ausgestaltung eines Gebindes hat den Vorteil, dass weniger Material benötigt wird, als wenn sich ein Trägerstrang über die gesamte Breite zwischen den äussersten zwei Trägersträngen erstreckt.

In einer anderen vorteilhaften Ausführungsform eines erfindungsgemässen Gebindes wird der Trägerstrang durch kettenförmig miteinander verbundene Packungseinheiten gebildet.

Ein solches Gebinde hat den Vorteil, dass zum Erhalten eines Verpackungsstranges kein separater Trägerstrang benötigt wird.

In einer weiteren vorteilhaften Ausführungsform eines erfindungsgemässen Gebindes weisen die Packungseinheiten ein im Wesentlichen flaches erstes Trägerelement auf, auf welchem eine Wareneinheit befestigbar ist oder befestigt ist.

In noch einer anderen vorteilhaften Ausführungsform eines erfindungsgemässen Gebindes weisen die Packungseinheiten zwei im Wesentlichen flache Trägerelemente auf, zwischen welchen eine Wareneinheit formschlüssig haltbar ist oder gehalten ist.

Vorteilhaft ist auf dem Trägerstrang mindestens ein maschinenlesbares erstes Datenelement angeordnet, das dem gesamten Gebinde oder einer Untermenge der Packungseinheiten des Gebindes logisch zugeordnet ist.

Ein solches erstes Datenelement erlaubt es beispielsweise, einer Vorrichtung, welche ein Gebinde bearbeitet, durch Auslesen des Datenelements Informationen über das Gebinde, seine Packungseinheiten und oder die darin enthaltenen Wareneinheiten zu erhalten, so dass beim Einbringen einer Wareneinheit in einen Transportbehälter die Identität der Wareneinheit in einer Datenbank dem entsprechenden Transportbehälter zugewiesen werden kann. Beispielsweise können die Art und die Anzahl der Wareneinheiten im Datenelement enthalten sein, so dass diese Information nicht von einer Bedienperson manuell erfasst werden muss. Dies reduziert den Arbeitsaufwand und eliminiert mögliche Fehlerquellen. Ebenso ist es dadurch möglich, dass beispielsweise verschiedene Wareneinheiten im gleichen Gebinde angeordnet sind. So können beispielsweise von einem bestimmten Typ eines Kleidungsstücks ein Set mit verschiedenen Grössen und/oder Farben im gleichen Gebinde geliefert werden.

Ein erstes Datenelement kann auch Daten enthalten, welche die korrekte Verarbeitung des Gebindes erleichtern. Beispielsweise können Daten zu Dimensionen und Materialeigenschaften der einzelnen Bauelemente des Gebindes bereitgestellt werden. Solche Angaben ermöglichen es, Vorrichtungen, welche verschiedene Typen von Gebinde verarbeiten sollen, entsprechend anzupassen.

Alternativ oder zusätzlich können bei einem erfindungsgemässen Gebinde auf den einzelnen Packungseinheiten maschinenlesbare zweite Datenelemente angeordnet sein.

Die zweiten Datenelemente sind logisch der entsprechenden Packungseinheit zugeordnet und können dazu auf der eigentlichen Packungseinheit oder aber auch auf der darin enthaltenen Wareneinheit angebracht sein.

Alternativ oder zusätzlich können bei einem erfindungsgemässen Gebinde auf dem Trägerstrang eine Mehrzahl von maschinenlesbaren zweiten Datenelementen angeordnet sein, wobei jeweils einer Packungseinheit eines dieser zweiten Datenelemente logisch zugeordnet ist.

Solche zweiten Datenelemente können beispielsweise Informationen über die Wareneinheiten enthalten, welche in den entsprechenden Packungseinheiten des Gebindes enthalten sind. Dies kann in Kombination mit einem ersten Datenelement der doppelten Kontrolle dienen. Weiter kann die Reihenfolge der Wareneinheiten entlang des Trägerstrangs flexibler ausgestaltet sein, da die Identifikation jeder Wareneinheit individuell erfolgen kann.

Die ersten Datenelemente beziehungsweise zweiten Datenelemente eines solchen erfindungsgemässen Gebindes können einen eindimensionalen Barcode, einen zweidimensionalen Barcode, ein Textelement, ein Grafikelement, und/oder ein RFID-Element aufweisen.

In einer anderen vorteilhaften Ausführungsvariante eines erfindungsgemässen Gebindes weist der Trägerstrang maschinenlesbare Markierungen zu Bestimmung der Position auf dem Trägerstrang auf.

Solche Positionsmarkierungen erlauben es, die korrekte Ausrichtung von Bearbeitungsvorrichtungen sicherzustellen, beispielsweise von Modulen zum Abtrennen von Packungseinheiten vom Gebinde. Ebenso können auf diese Weise im Zusammenspiel mit Daten zur Art und Position von Wareneinheiten auf dem Trägerstrang, wie sie zum Beispiel in einem ersten Datenelement bereitgestellt werden können, einzelne Packungseinheiten beziehungsweise Wareneinheiten identifiziert werden, ohne dass die entsprechenden Packungseinheiten einzelne Identifikationsdaten aufweisen.

In einer anderen vorteilhaften Ausführungsvariante eines erfindungsgemässen Gebindes weist der Trägerstrang Wirkelemente auf, welche mit Fördermodulen zusammenwirken können. Die Wirkelemente können beispielsweise als Führungslochungen oder seitliche Einkerbungen entlang des Trägerstrangs ausgestaltet sein.

Solche Wirkelemente erlauben die formschlüssige Wechselwirkung eines Fördermodules mit dem Trägerstrang, was eine präzisere Förderung erlaubt als beispielsweise bei einer kraftschlüssigen Förderung des Trägerstrangs.

Vorteilhaft ist bei einem erfindungsgemässen Gebinde an einem ersten Ende des Trägerstrangs ein Startelement angeordnet.

Ein solches Startelement kann beispielsweise dazu dienen, den Trägerstrang korrekt in eine Bearbeitungsvorrichtung einzuführen. Ein ersten Datenelement ist vorteilhaft auf dem Startelement angeordnet.

Vorteilhaft ist bei einem erfindungsgemässen Gebinde an einem zweiten Ende des Trägerstrangs ein Abschlusselement angeordnet.

Ein solches Abschlusselement bietet beispielsweise den Vorteil, dass das Erreichen des regulären Endes des Trägerstrangs des Gebindes detektiert werden kann. So kann beispielsweise ein vorzeitiges Erreichen eines Endes des Trägerstrangs festgestellt werden, beispielsweise wenn dieser zuvor gerissen ist.

Bei noch einer weiteren vorteilhaften Variante eines erfindungsgemässen Gebindes ist das Gebinde in einem Behälter angeordnet.

Ein solcher Behälter kann beispielsweise eine Kiste oder eine Verpackungsschachtel sein, welche den problemlosen Transport und die einfache Lagerung des Gebindes erlaubt.

Ein zweiter Aspekt der Erfindung betrifft ein vorteilhaftes Verfahren zum Erstellen eines Gebindes aus eine Mehrzahl von Wareneinheiten. Ein solches vorteilhaftes Verfahren umfasst die Schritte:
- Bereitstellen eines Trägerstrangs;
- Bereitstellen einer Mehrzahl von Packungseinheiten;
- Einbringen von Wareneinheiten in die Packungseinheiten; und
- Anbringen der Mehrzahl von Packungseinheiten entlang des Trägerstrangs.

Ein erfindungsgemässes Gebinde wird vorteilhaft am Ort der Produktion der Wareneinheiten hergestellt.

In einer vorteilhaften Variante eines erfindungsgemässen Verfahrens werden die Packungseinheiten aus dem Trägerstrang gebildet. Ein solches Verfahren hat den Vorteil, dass auf einen separaten Trägerstrang verzichtet werden kann.

In einer anderen vorteilhaften Variante des erfindungsgemässes Verfahrens werden die Packungseinheiten auf dem Trägerstrang befestigt.

In einer weiteren vorteilhaften Variante des erfindungsgemässes Verfahrens wird der Trägerstrang durch Anordnen der Packungseinheiten in Reihe hintereinander gebildet. In noch einer anderen vorteilhaften Variante des erfindungsgemässes Verfahrens wird der Trägerstrang durch Verketten der Packungseinheiten gebildet.

Vorteilhaft werden bei einem erfindungsgemässen Verfahren die Wareneinheiten nach dem Anbringen der Packungseinheiten entlang des Trägerstrangs in die Packungseinheiten eingebracht.

Die Wareneinheiten werden bei einem erfindungsgemässen Verfahren vorteilhaft vor dem Anbringen der Packungseinheiten entlang des Trägerstrangs in die Packungseinheiten eingebracht.

Die Wareneinheiten können auch erst nach dem Anbringen der Packungseinheiten auf dem Trägerstrang in die Packungseinheiten eingebracht werden. Dies kann beispielsweise im Wesentlichen direkt nach dem Anbringen der Packungseinheiten geschehen. Alternativ kann das Gebinde komplett ohne Wareneinheiten hergestellt und für eine spätere Befüllung der Packungseinheiten mit Wareneinheiten bereitgestellt werden.

Ein dritter Aspekt der Erfindung betrifft eine vorteilhafte Vorrichtung zum Einbringen von Wareneinheiten in einen Transportbehälter. Eine solche vorteilhafte Vorrichtung umfasst ein Modul zur Zuförderung eines erfindungsgemässen Gebindes oder eines gemäss einem erfindungsgemässen Verfahren hergestellten Gebindes; ein Modul zum Abtrennen von Packungselementen von einem zugeförderten Gebinde; und ein Modul zum Einbringen von vom Gebinde abgetrennten Packungseinheiten in einen Transportbehälter.

Vorteilhaft weist eine solche erfindungsgemässe Vorrichtung ein Modul zum Identifizieren von Gebinden und/oder Packungseinheiten und/oder Wareneinheiten auf.

Der Begriff «Identifizieren» wird im Zusammenhang mit dieser Beschreibung sowohl für die Identifikation eines bestimmten individuellen Gegenstands verwendet, beispielsweise einer eindeutigen Identifikationsnummer, als auch für die Identifikation eines Typs eines bestimmten Gegenstandes, beispielsweise einer Artikelnummer.

Ein solches Identifikationsmodul kann eine Leseeinheit umfassen, welche dazu vorgesehen ist, ein Datenelement eines Gebindes beziehungsweise einer Packungseinheit des Gebindes auszulesen. Ein Identifikationsmodul kann auch eine Auswerteeinheit aufweisen, die dazu vorgesehen ist, die eingelesenen Daten auszuwerten und zur Identifikation eines Gebindes beziehungsweise einer Packungseinheit zu nutzen.

Eine erfindungsgemässe Vorrichtung umfasst vorteilhaft ein Modul zum Bereitstellen von Transportbehältern.

Beispielsweise kann ein solches Bereitstellungsmodul in ein Fördersystem einer Intralogistik-Anlage integriert sein. Es kann so ausgestaltet sein, dass Transportbehälter im Fördersystem zugeführt, für die Befüllung vorbereitet und anschliessend im Fördersystem wieder weggefördert werden können.

Vorteilhaft ist bei einer erfindungsgemässen Vorrichtung das Modul zum Bereitstellen von Transportbehältern dazu eingerichtet, einen Transportbehälter aus einem Fördersystem zu übernehmen, und/oder einen Transportbehälter an ein Fördersystem zu übergeben.

Das Fördersystem kann insbesondere ein Hängefördersystem sein. Der Transportbehälter kann insbesondere eine Hängefördertasche sein.

Vorteilhaft ist in einer erfindungsgemässen Vorrichtung das Modul zum Bereitstellen von Transportbehältern dazu eingerichtet, einen Transportbehälter in Form einer Hängefördertasche aus einem Hängefördersystem zu übernehmen und/oder an das Hängefördersystem zu übergeben.

In einer weiteren vorteilhaften Ausführungsform einer erfindungsgemässen Vorrichtung ist das Modul zum Bereitstellen von Transportbehältern dazu eingerichtet, einen Transportbehälter in Form einer Hängefördertasche aus einem geschlossenen Zustand in einen geöffneten Zustand zu überführen.

In einer anderen vorteilhaften Ausführungsform einer erfindungsgemässen Vorrichtung ist das Modul zum Bereitstellen von Transportbehältern dazu eingerichtet, einen Transportbehälter in Form einer Hängefördertasche eines Hängefördersystems vor dem Einbringen der Wareneinheit auszurichten.

Besonders vorteilhaft ist dabei bei einer solchen erfindungsgemässen Vorrichtung das Modul zum Bereitstellen von Transportbehältern dazu eingerichtet, die Hängefördertasche vor dem Einbringen der Wareneinheit von einer Förderposition in eine Befüllungsposition zu drehen.

Eine erfindungsgemässe Vorrichtung zum Einbringen von Wareneinheiten in einen Transportbehälter ist vorteilhaft in ein Fördersystem einer Intralogistik-Anlage integriert.

Ein vierter Aspekt der Erfindung betrifft ein Verfahren zum Einbringen von Wareneinheiten in einen Transportbehälter. Ein solches erfindungsgemässes Verfahren umfasst die Schritte:
- Bereitstellen eines erfindungsgemässen Gebindes oder eines gemäss einem erfindungsgemässen Verfahren hergestellten Gebindes;
- Bereitstellen eines Transportbehälters;
- Abtrennen von mindestens einer Packungseinheit, welche mindestens eine Wareneinheit beinhaltet, von dem Gebinde; und
- Einbringen der mindestens einen abgetrennten Packungseinheit in den Transportbehälter.

Vorteilhaft werden bei einem solchen erfindungsgemässen Verfahren die Packungseinheiten der Reihe nach entlang des Trägerstrangs vom Gebinde abgetrennt.

Alternativ oder zusätzlich können bei einem solchen erfindungsgemässen Verfahren die Packungseinheiten in Gruppen von zwei oder mehr Packungseinheiten vom Gebinde abgetrennt und in den Transportbehälter eingebracht werden.

Vorteilhaft ist bei einem erfindungsgemässen Verfahren der bereitgestellte Transportbehälter ein Transportbehälter eines Fördersystems, beispielsweise eine Hängefördertasche eines Hängefördersystems.

In einer vorteilhaften Variante eines erfindungsgemässen Verfahrens zum Einbringen von Wareneinheiten in einen Transportbehälter wird zum Einbringen der mindestens einen abgetrennten Packungseinheit in einen Transportbehälter der genannte Transportbehälter im Fördersystem angehalten und anschliessend die mindestens eine Packungseinheit in den Transportbehälter eingebracht.

In einer anderen vorteilhaften Variante eines erfindungsgemässen Verfahrens zum Einbringen von Wareneinheiten in einen Transportbehälter wird zum Einbringen der mindestens einen abgetrennten Packungseinheit in einen Transportbehälter der genannte Transportbehälter im Fördersystem kontinuierlich gefördert, wobei das Einbringen der mindestens einen Packungseinheit in den bewegten Transportbehälter erfolgt.

Eine kontinuierliche Befüllung hat den Vorteil, dass wegen der wegfallenden Abbrems- und Beschleunigungsvorgänge höhere Taktzeiten erreichbar sind. Eine Vorrichtung zum automatischen Befüllen von Hängefördertaschen, während diese kontinuierlich gefördert werden, ist beispielsweise aus US 2018/0208407 A1 bekannt.

Vorteilhaft wird bei einem erfindungsgemässen Verfahren der Transportbehälter in Form einer Hängefördertasche eines Hängefördersystems vor dem Einbringen der Wareneinheit aus einem geschlossenen Zustand in einen geöffneten Zustand überführt.

Ebenfalls vorteilhaft wird bei einem erfindungsgemässen Verfahren der Transportbehälter in Form einer Hängefördertasche eines Hängefördersystems vor dem Einbringen der Wareneinheit ausgerichtet.

Besonders vorteilhaft wird dabei die Hängefördertasche vor dem Einbringen der Wareneinheit von einer Förderposition in eine Befüllungsposition gedreht.

Ein fünfter Aspekt der Erfindung betrifft eine Vorrichtung zum Einbringen von Liegewareneinheiten in einen Transportbehälter. Eine solche erfindungsgemässe Vorrichtung umfasst ein Einbringmodul zum Einbringen von Liegewareneinheiten in einen Transportbehälter; ein Zufördermodul zur Zuförderung von Liegewareneinheiten zu dem Einbringmodul; und ein erstes Identifikationsmodul zum Identifizieren von Liegewareneinheiten. Das Zufördermodul umfasst eine Liegefördervorrichtung, mit welchem Liegewareneinheiten entlang eines Förderpfades förderbar sind. Das Identifikationsmodul ist dazu eingerichtet, die Identität einer Liegewareneinheit zu bestimmen.

Das Zufördermodul kann als Liegefördervorrichtung, beispielsweise als Bandförderer, ausgestaltet sein.

Das erste Identifikationsmodul ist vorteilhaft dazu ausgestaltet, ein Datenelement der Liegewareneinheit auszulesen.

Das Identifikationsmodul ist weiter vorteilhaft dazu ausgestaltet, die Form und die Dimensionen der Liegewareneinheit zu bestimmen.

Unter einer Liegewareneinheit wird ein Objekt verstanden, dass dazu geeignet ist, liegend transportiert zu werden. Eine Liegewareneinheit kann beispielsweise ein insbesondere verpackte oder unverpackte Einzelware sein, ein Kleidungsstück, oder eine aus einem erfindungsgemässen Gebinde abgetrennte Packungseinheit.

Ein Transportbehälter kann insbesondere eine Hängefördertasche eines Hängefördersystems sein.

Eine Hängefördertasche eines Hängefördersystems umfasst vorteilhaft einen Laufiniagen, welcher auf einer Laufschiene des Hängefördersystems gleitend oder rollend gefördert werden kann, sowie eine an dem Laufwagen mittels einer geeigneten Aufhängevorrichtung hängend gelagerte Transporttasche, in welcher Wareneinheiten gelagert werden können.

Besonders vorteilhaft weist ein Transportbehälter ein auslesbares Datenelement auf, welches eine Identifikation des Transportbehälters erlaubt. Ein solches auslesbares Datenelement kann insbesondere ein optisch lesbares Datenelement oder ein RFID-Element sein.

Ist der Transportbehälter als Hängefördertasche eines Hängefördersystems ausgestaltet, so kann das Datenelement an dem Laufwagen der Hängefördertasche befestigt sein, und/oder an der daran hängend befestigten Transporttasche der Hängefördertasche.

Vorteilhaft ist bei einer erfindungsgemässen Vorrichtung das Identifikationsmodul dazu eingerichtet, die Identität einer Liegewareneinheiten zu bestimmen, wenn sich diese auf der Liegefördervorrichtung an einer Identifikationsposition befindet.

Eine solche selektive Identifikation einer Liegewareneinheit erlaubt es, die zeitliche oder räumliche Abfolge von Liegewareneinheiten auf dem Zuführmodul zu erhöhen, ohne dass es zu uneindeutigen Identifikationen kommen kann.

Vorteilhaft umfasst das erste Identifikationsmodul eine optische Leseeinheit und/oder eine RFID-Leseeinheit.

Eine optische Leseeinheit kann insbesondere eine Kamera oder einen Barcode-Scanner umfassen, um ein optisch lesbares Datenelement wie einen Barcode oder einen QR-Code auszulesen, welcher die Informationen zur Identifikation der Wareneinheit enthält. Ein optisch lesbares Datenelement muss naturgegeben auf der Aussenseite einer Wareneinheit oder anderweitig von aussen einsehbar angeordnet sein, damit ein Auslesen der Identifikationsdaten möglich ist. Da nicht unbedingt gesteuert werden kann, wie eine Wareneinheit auf dem Zufördermodul angeordnet ist, kann es notwendig sein, eine Objekt mit mehreren optisch lesbaren Datenelementen zu versehen.

RFID-Elemente haben den Vorteil, dass dieses auch innerhalb einer Wareneinheit angeordnet sein kann.

Besonders vorteilhaft ist eine RFID-Leseeinheit des Identifikationsmoduls unterhalb des Zufördermoduls angeordnet.

Eine Anordnung der RFID-Leseeinheit unterhalb des Zufördermoduls erlaubt die Verarbeitung von Liegewareneinheiten verschiedener Grösse. Ist die die RFID-Leseeinheit hingegen über dem Zufördermodul angeordnet, muss die Distanz zum Zufördermodul ausreichend sein, dass die grösste vorgesehene Wareneinheit passieren kann. Bei einer seitlichen Anordnung der RFID-Leseeinheit wiederum ist die Distanz zur Wareneinheit, beziehungsweise zu einem auf der Wareneinheit angeordneten RFID-Transponder, nicht definiert.

Weiter hat eine Anordnung der RFID-Leseeinheit unterhalb des Zufördermoduls den Vorteil, dass die Distanz zu einem RFID-Transponder so gering wie möglich ist. Dies erlaubt die Verwendung von UHF-RFID-Transponder, welche auf kürzere Distanz ausgelesen werden können, was die notwendige Minimaldistanz zwischen aufeinander folgenden Wareneinheiten verringert.

In einer anderen vorteilhaften Ausführungsform einer erfindungsgemässen Vorrichtung umfasst das Zufördermodul einen Bandförderer mit einer oberen Bandebene und einer unteren Bandebene. Ein RF-Sender und/oder ein RF-Empfänger einer RFID-Leseeinheit des Identifikationsmoduls ist zwischen der oberen Bandebene und der unteren Bandebene des Bandförderers angeordnet.

Auf diese Weise kann der RF-Sender und/oder der RF-Empfänger der RFID-Leseeinheit auf minimale Distanz zur Wareneinheit des Bandförderers gebracht werden, die im Wesentlichen nur durch die Dicke des Bandes des Bandförderers gegeben ist.

Vorteilhaft weist das Band des Bandförderers keine metallischen beziehungsweise leitende Komponenten auf, damit der Einfluss auf die RFID-Leseeinheit minimal ist.

In einer weiteren vorteilhaften Ausführungsform einer erfindungsgemässen Vorrichtung weist das erste Identifikationsmodul eine Lichtschrankenvorrichtung zur Feststellung der Anwesenheit beziehungsweise Position eines Objektes, insbesondere einer Liegewareneinheit, auf dem Zufördermodul auf.

Eine solche Lichtschrankenvorrichtung erlaubt es in Kombination mit der Fördergeschwindigkeit eines Zuführmoduls die Position und Länge einer Wareneinheit auf dem Zuführmodul zu kennen. Auf diese Weise kann die Wareneinheit an der idealen Identifikationsposition des Identifikationsmoduls positioniert werden.

In noch einer weiteren vorteilhaften Ausführungsform einer erfindungsgemässen Vorrichtung ist die Vorrichtung mit einer Steuerungsvorrichtung mit einer Datenbank verbunden, und die Steuerungsvorrichtung ist dazu eingerichtet, die Identität eines befüllen Transportbehälters und die Identität der darin eingebrachten Liegewareneinheit in der Datenbank logisch miteinander zu verknüpfen.

Diese logische Verknüpfung von Wareneinheit und Transportbehälter wird in der Intralogistik als ein Verheiraten von Wareneinheit und Transportbehälter bezeichnet.

Noch eine weitere vorteilhafte Ausführungsform einer erfindungsgemässen Vorrichtung weist ein Bereitstellmodul zum Bereitstellen von Transportbehältern auf.

Vorteilhaft weist das Bereitstellmodul einer solchen erfindungsgemässen Vorrichtung ein zweites Identifikationsmodul zum Identifizieren von Transportbehältern auf.

Mit dem zweiten Identifikationsmodul können Datenelemente des Transportbehälters ausgelesen werden, welche eine Identifikation des Transportbehälters erlauben.

Besonders vorteilhaft umfasst das zweite Identifikationsmodul eine optische Detektoreinheit und/oder eine RFID-Leseeinheit.

Eine optische Leseeinheit kann insbesondere eine Kamera oder einen Barcode-Scanner umfassen, um ein optisch lesbares Datenelement wie einen Barcode oder einen QR-Code auszulesen.

Vorteilhaft ist bei einer erfindungsgemässen Vorrichtung das Bereitstellmodul dazu eingerichtet, einen Transportbehälter aus einem Fördersystem zu übernehmen, und/oder einen Transportbehälter an ein Fördersystem zu übergeben.

Vorteilhaft ist bei einer erfindungsgemässen Vorrichtung das Bereitstellmodul dazu eingerichtet, einen Transportbehälter in Form einer Hängefördertasche aus einem geschlossenen Zustand in einen geöffneten Zustand zu überführen.

Vorteilhaft ist bei einer erfindungsgemässen Vorrichtung das Bereitstellmodul dazu eingerichtet, einen Transportbehälter in Form einer Hängefördertasche eines Hängefördersystems vor dem Einbringen der Wareneinheit auszurichten.

Vorteilhaft ist bei einer erfindungsgemässen Vorrichtung das Bereitstellmodul dazu eingerichtet, die Hängefördertasche vor dem Einbringen der Wareneinheit von einer Förderposition in eine Befüllungsposition zu drehen.

In einer anderen vorteilhaften Variante einer erfindungsgemässen Vorrichtung umfasst die Vorrichtung ein Modul zur Zuförderung eines Gebindes mit einem Trägerstrang, auf welchem eine Mehrzahl von Packungseinheiten hintereinander in Reihe angeordnet ist; und ein Abtrennmodul zum Bereitstellen von Liegewareneinheiten durch das Abtrennen von Packungselementen von einem zugeförderten Gebinde.

Vorteilhaft ist eine erfindungsgemässe Vorrichtung in ein Fördersystem einer Intralogistik-Anlage integriert.

Ein sechster Aspekt der Erfindung betrifft ein Verfahren zum Einbringen von Liegewareneinheiten in einen Transportbehälter. Bei einem solchen erfindungsgemässen Verfahren wird
- eine Liegewareneinheit auf einem Zufördermodul bereitgestellt;
- ein Transportbehälter bereitgestellt;
- die Liegewareneinheit identifiziert;
- der Transportbehälter identifiziert; und
- die Liegewareneinheit in den Transportbehälter eingebracht.

Unter einer Liegewareneinheit wird ein Objekt verstanden, dass dazu geeignet ist, liegend transportiert zu werden. Eine Liegewareneinheit kann beispielsweise ein insbesondere verpackte oder unverpackte Einzelware sein, ein Kleidungsstück, oder eine aus einem erfindungsgemässen Gebinde abgetrennte Packungseinheit.

Ein Transportbehälter kann insbesondere eine Hängefördertasche eines Hängefördersystems sein.

Eine Hängefördertasche eines Hängefördersystems umfasst vorteilhaft einen Laufiniagen, welcher auf einer Laufschiene des Hängefördersystems gleitend oder rollend gefördert werden kann, sowie eine an dem Laufwagen mittels einer geeigneten Aufhängevorrichtung hängend gelagerte Transporttasche, in welcher Wareneinheiten gelagert werden können.

Besonders vorteilhaft weist ein Transportbehälter ein auslesbares Datenelement auf, welches eine Identifikation des Transportbehälters erlaubt. Ein solches auslesbares Datenelement kann insbesondere ein optisch lesbares Datenelement oder ein RFID-Element sein.

Ist der Transportbehälter als Hängefördertasche eines Hängefördersystems ausgestaltet, so kann das Datenelement an dem Laufwagen der Hängefördertasche befestigt sein, und/oder an der daran hängend befestigten Transporttasche der Hängefördertasche.

Vorteilhaft wird bei einem solchen erfindungsgemässen Verfahren die Identität der Liegewareneinheit und die Identität des Transportbehälters logisch miteinander verknüpft.

Eine solche logische Verknüpfung erfolgt vorteilhaft in einer Datenbank, beispielsweise einer Datenbank einer Steuerungsvorrichtung eine Intralogistik-Anlage.

Weitere Aspekte der vorliegenden Erfindung ergeben sich auch aus der nachfolgenden Beschreibung.

### Kurze Beschreibung der Figuren

Zum besseren Veranschaulichung der vorliegenden Erfindung wird nachfolgend auf die Zeichnungen Bezug genommen. Diese zeigen lediglich Ausführungsbeispiele des Erfindungsgegenstands und sind nicht dazu geeignet, die Erfindung auf die hierin offenbarten Merkmale zu beschränken. Für gleiche oder gleich wirkende Teile werden in den nachfolgenden Figuren und der dazugehörigen Beschreibung gleiche oder ähnliche Bezugszeichen verwendet.
- Figur 1: zeigt schematisch in Aufsicht ein Ausführungsbeispiel eines erfindungsgemässen Gebindes.
- Figur 2: zeigt schematisch in Aufsicht ein anderes Ausführungsbeispiel eines erfindungsgemässen Gebindes.
- Figur 3: zeigt schematisch in Aufsicht die Herstellung eines weiteren Ausführungsbeispiel eines erfindungsgemässen Gebindes.
- Figur 4: zweigt schematisch die Herstellung der Packungseinheiten bei einer Variante eines erfindungsgemässen Gebindes.
- Figur 5: zeigt schematisch in Aufsicht noch ein anderes Ausführungsbeispiel eines erfindungsgemässen Gebindes, bei welchem die Wareneinheiten mit Banderolen auf den Gebinde befestigt sind.
- Figur 6: zeigt schematisch in Aufsicht ein weiteres Ausführungsbeispiel eines erfindungsgemässen Gebindes, bei welchem die Wareneinheiten mit Banderolen auf den Gebinde befestigt sind.
- Figur 7: zeigt schematisch ein Ausführungsbeispiel eines erfindungsgemässen Gebindes mit zweilagigen Packungseinheiten, (a) in Aufsicht und (b) in Seitenansicht.
- Figur 8: zeigt schematisch ein Ausführungsbeispiel eines erfindungsgemässen Gebindes mit aus dem Trägerstrang gebildeten Banderolen zur Befestigung der Wareneinheiten, (a) in Aufsicht und (b) in einem Schnitt entlang des Längsrichtung.
- Figur 9: zeigt schematisch in Aufsicht ein Ausführungsbeispiel eines erfindungsgemässen Gebindes mit zweiten Datenelementen auf dem Trägerstrang zwischen benachbarten Packungseinheiten.
- Figur 10: zeigt schematisch in Untersicht ein Ausführungsbeispiel eines erfindungsgemässen Gebindes mit zweiten Datenelementen auf der Rückseite des Trägerstrangs.
- Figur 11: zeigt schematisch in Untersicht ein Ausführungsbeispiel eines erfindungsgemässen Gebindes mit Positionsmarkierungen auf der Rückseite des Trägerstrangs.
- Figur 12: zeigt schematisch in Aufsicht ein Ausführungsbeispiel eines erfindungsgemässen Gebindes mit zwei parallelen Trägersträngen.
- Figur 13: zeigt schematisch im Querschnitt ein erfindungsgemässes Gebinde in einem Behälter.
- Figur 14: zeigt schematisch in Aufsicht ein weiteres erfindungsgemässes Gebinde mit seitlichen Lochstreifen.
- Figur 15: zeigt schematisch in Aufsicht ein anderes erfindungsgemässes Gebinde mit seitlichen Versteifungselementen.
- Figur 16: zeigt schematisch in Aufsicht ein erfindungsgemässes Gebinde wie in Figur 9 dargestellt, mit einem Startelement am ersten Ende des Trägerstranges.
- Figur 17: zeigt schematisch in Aufsicht ein erfindungsgemässes Gebinde wie in Figur 9 dargestellt, mit einem Abschlusselement am zweiten Ende des Trägerstranges.
- Figur 18: zeigt schematisch in Seitenansicht eine erfindungsgemässe Vorrichtung zum Einbringen von Wareneinheiten in einen Transportbehälter.
- Figur 19: zeigt schematisch eine erfindungsgemässe Vorrichtung als Teil einer Intralogistik-Anlage.
- Figur 20: zeigt schematisch in Seitenansicht eine weitere erfindungsgemässe Vorrichtung zum Einbringen von Wareneinheiten in einen Transportbehälter, in Form einer Hängefördertasche.
- Figur 20a: zeigt schematisch in Seitenansicht eine weitere erfindungsgemässe Vorrichtung zum Einbringen von Wareneinheiten in einen Transportbehälter, in Form einer Förderschale.
- Figur 21: zeigt schematisch in Seitenansicht noch eine weitere erfindungsgemässe Vorrichtung zum Einbringen von Wareneinheiten in einen Transportbehälter, mit einer Sortierfunktion.
- Figur 22: zeigt schematisch in Seitenansicht eine andere erfindungsgemässe Vorrichtung zum Einbringen von Wareneinheiten in einen Transportbehälter, mit vorgeschalteten Bandförderern als Pufferspeicher für Wareneinheiten.
- Figur 23: zeigt schematisch in Seitenansicht eine erfindungsgemässe Vorrichtung zum Einbringen von Wareneinheiten in einen Transportbehälter, einer RFIDLeseeinheit und einer optischen Leseeinheit.
- Figur 24: zeigt schematisch in Seitenansicht eine erfindungsgemässe Vorrichtung zum Einbringen von Wareneinheiten in einen Transportbehälter, mit einer manuellen Beschickung der Vorrichtung.

### Wege zur Ausführung der Erfindung

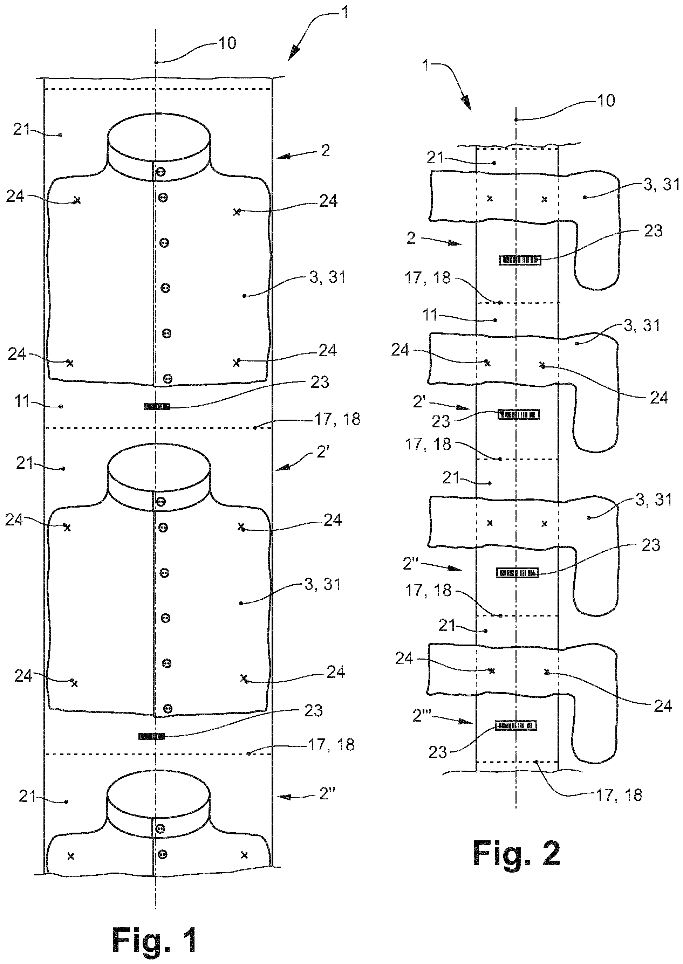

Eine mögliche Ausführungsform eines erfindungsgemässen Gebindes 1 ist in Figur 1 dargestellt. Das Gebinde 1 umfasst einen Trägerstrang 11 in Form eines flachen Streifens oder Bandes, welches eine Längsrichtung 10 definiert. Der Trägerstrang 11 ist aus einem Material gefertigt, welches eine gewisse mechanische Stabilität aufweist. Die mechanische Stabilität muss dabei ausreichend sein, dass eine vom Trägerstrang 11 abgetrennte Packungseinheit 2, 2', 2" senkrecht auf einer Längskante oder Querkante stehen kann, ohne dass sich die Packungseinheit sich unter dem Eigengewicht der Packungseinheit und der darin angeordneten Wareneinheit zusammenfaltet oder kollabiert.

Im gezeigten Beispiel kann für den Trägerstrang 11 beispielsweise ein dünner Karton als Material gewählt werden, der beispielsweise als Endlosbahn ab Rolle bereitgestellt wird. Alternativ kann auch ein anderes geeignetes Material gewählt werden, wie beispielsweise eine Kunststofffolie mit geeigneter Steifigkeit, wobei in einem solchen Fall vorteilhaft ein biologisch abbaubares Material gewählt wird.

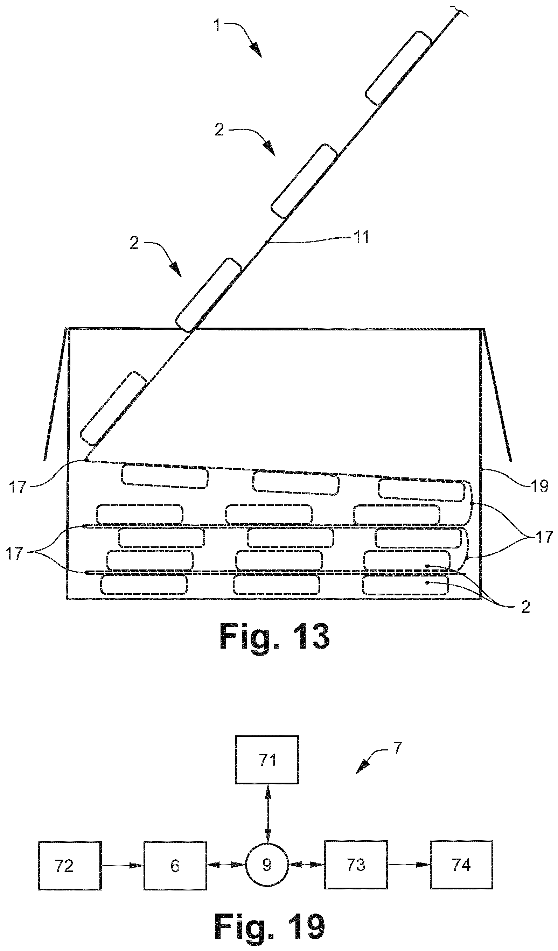

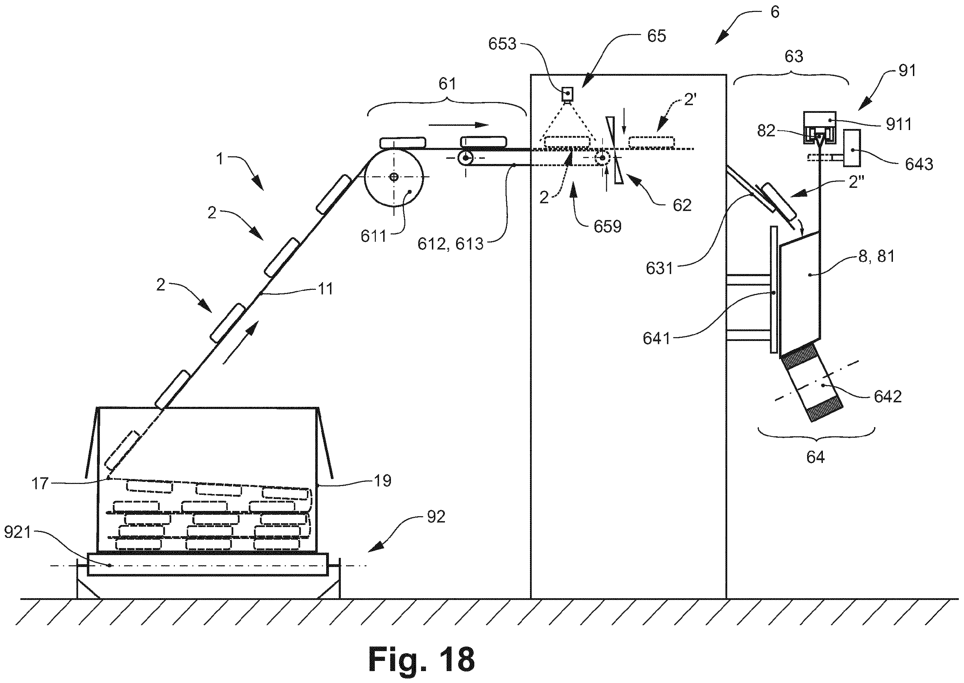

Der Trägerstrang 11 weist in regelmässigen Abständen Perforationen 17 quer zur Längsrichtung 10 auf. Diese Perforationen unterteilen der Trägerstrang 11 funktionell in eine Mehrzahl von Packungseinheiten 2, 2', 2" mit jeweils einem flachen Trägerelement 21. Gleichzeitig entstehen entlang der Perforationen 17 lokale Schwächungen der mechanischen Stabilität des Trägerstrangs. Die Perforationen wirken deshalb als Scharnierelemente, an welchen benachbarte Trägerelemente 21 des Trägerstrangs 11 gegeneinander verschwenkbar sind. Dies ermöglicht es, dass das Gebinde 1, analog zu einer Kette, senkrecht zur Längsrichtung 10 und zur Perforation 17 flexibel ausgelenkt werden kann Sie kann so beispielsweise mit einer geeigneten Vorrichtung gefördert werden, wie sie nachfolgend im Zusammenhang mit Figur 18 noch diskutiert werden wird. Sie kann auch platzsparend in einem Behälter untergebracht werden, wie in Figur 13 gezeigt.

Die Perforationen können zusätzlich auch als Sollbruchstellen 18 genutzt werden, um bei Bedarf eine Packungseinheit 2 vom restlichen Gebinde 1 abzutrennen. Derart vereinzelte Packungseinheiten 2, 2', 2" können dann beispielsweise in einen Transportbehälter eines Fördersystem eingebracht werden, ohne dass die Wareneinheit beschädigt oder in der Qualität beeinträchtigt wird. Beispielsweise kann eine solche Packungseinheit in eine Hängefördertasche eines Hängefördersystems eingeworfen werden.

Auf jeder Packungseinheit 2, 2', 2" ist eine Wareneinheit 3 in Form eines in üblicher Form flach gefalteten Hemdes 31 angeordnet. Die Wareneinheiten 3, 31 sind an vier Befestigungspunkten 24 mit dem Trägerelement 21 der Packungseinheit 2, 2', 2" verbunden. Beispielsweise kann das Hemd an den vier Befestigungspunkten 24 mit einem Faden angenäht oder mit einer Stecknadel angesteckt oder anderweitig formschlüssig mit der Packungseinheit verbunden sein.

Es können auch entsprechend geeignete Klammerelemente verwendet werden, die beispielsweise über seitlichen Kanten das Hemd 31 und das Trägerelement 21 der Packungseinheit 2 kraftschlüssig zusammenklemmen.

Zur effektiven mechanischen Stabilität der Packungseinheit trägt auch die Steifigkeit des gesamten Verbunds von Packungseinheit 2 und Wareneinheit 3 bei. Für eine Wareneinheit, welche bereits eine gewisse mechanischen Stabilität aufweist, kann so beispielsweise das Material des Trägerstrangs 11 dünner gewählt werden.

Die Packungseinheit 2 hat im gezeigten Beispiel neben der resultierenden mechanischen Stabilität der Packungseinheit zusätzlich die Wirkung, dass beim Fördern und Lagern vereinzelter Packungseinheiten die Kanten der Wareneinheiten geschützt werden.

Im gezeigten Ausführungsbeispiel sind auf den Trägerelementen 21 der Packungseinheiten Datenelemente 23 in Form von optisch auslesbaren Barcodes angeordnet. Alternativ können auch andere Datenelemente verwendet werden, wie beispielsweise zweidimensionale QR-Codes oder RFID-Elemente. Die Datenelemente 23 können beispielsweise Informationen zur Art der in der Packungseinheit 2 enthaltenen Wareneinheit 3, Daten zum Produktionsablauf wie beispielsweise Chargennummer, Herstellungsdatum und Herstellungsort, eine individuelle Identifikationsnummer oder einen Verweis auf einen Eintrag in einer Datenbank enthalten.

Das Datenelement 23 kann beispielsweise beim Einbringen der Wareneinheit 3 in die Packungseinheit 2 angebracht werden. Alternativ kann das Datenelement 23 unabhängig von der Wareneinheit 3 auf dem Trägerelement 21 angebracht und später im Produktionsablauf mit Daten beschrieben werden. Es können auch einer eindeutigen Identifikationsnummer in einer Datenbank entsprechende Daten zugeordnet werden.

Ein anderes vorteilhaftes Ausführungsbeispiel eines erfindungsgemässen Gebindes 1 ist in Figur 2 gezeigt. Der Trägerstrang 11 ist wiederum band- beziehungsweise streifenförmig ausgestaltet, und ist durch Perforierungsstreifen 17 in einzelne Packungseinheiten 2, 2', 2", 2‴ mit flachen Trägerelementen 21 unterteilt. Auf den Trägerelementen 21 der Packungseinheiten ist an jeweils zwei Befestigungspunkten eine Wareneinheit 3 in Form eines Sockenpaares 31 befestigt, beispielsweise durch Annähen an das Trägerelement 21.

Für Wareneinheiten 3 wie beispielsweise die gezeigten Socken 31, ist das Risiko einer mechanischen Beschädigung beim Einbringen in einen Transportbehälter 8 eher gering. Ein erfindungsgemässes Gebinde ist dafür dennoch vorteilhaft, weil es eine sehr effiziente Bereitstellung der Wareneinheiten für das spätere Abfüllen in Transportbehälter eines Intralogistik-Systems erlaubt.

Normalerweise werden Wareneinheiten 3 bei der Produktion einzeln verpackt und diese vereinzelten Packungseinheiten wiederum in einen Transportbehälter gepackt, mit welchem sie dann vom Hersteller zum Verarbeiter gelangen, beispielsweise zu einem Versandhandelszentrum. Dort werden sie zur weiteren Verarbeitung manuell oder mit an die Produkte angepassten Spezialapparaten aus dem Transportbehälter entnommen und vereinzelt. Mit einem erfindungsgemässen Gebinde hingegen können die Wareneinheiten bereits beim Hersteller im kontinuierlichen Produktionsprozess in die Packungseinheiten 2 eines erfindungsgemässen Gebindes 1 eingebracht werden. Das entstehende Gebinde kann dann integral verpackt und transportiert werden. Im Versandhandelszentrum kann dann das Gebinde 1 auf einfache Weise in einzelne Packungseinheiten 2 überführt werden, die dann beispielsweise in Transportbehälter eines Hängefördersystems überführt werden können.

Es ist auch möglich, Gebinde in flexiblen Grössen bereitzustellen, indem das Gebinde als Endlos-Kette erzeugt wird, von welcher dann Gebinde mit der gewünschten Anzahl Wareneinheiten abgetrennt werden.

Für Wareneinheiten 3, bei welchen wie oben ausgeführt die mechanische Stabilität der Packungseinheit sekundär ist, kann der Trägerstrang 11 auch aus einem flexiblen Material gefertigt werden, beispielsweise als flexibler Streifen aus Papier, Kunststoff oder textilem Flächenmaterial.

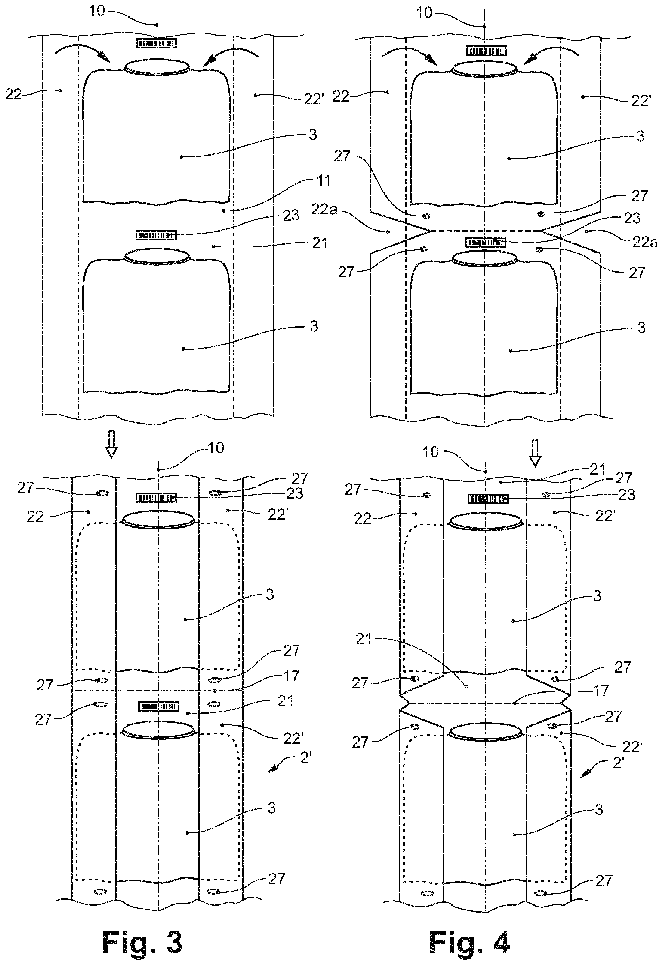

Eine alternative Ausführungsform eines erfindungsgemässen Gebindes und dessen Herstellung ist in Figur 3 dargestellt. Zur Herstellung des Gebindes 1wird ab Rolle eine Bahn 11 aus einem geeigneten Material, beispielsweise Papier geeigneter Dicke, bereitgestellt. Die Wareneinheiten 3, im gezeigten Beispiel ein T-Shirt oder Pullover 31, werden auf einem mittleren Streifen 21' des Trägerstrangs 11 abgelegt. Die äusseren Ränder 22, 22' des Trägerstrangs 11 werden dann nach vorne gegen die Innenseite umgeklappt, so dass die umgeklappten Aussenränder 22, 22' auf der Wareneinheit 3 zu liegen kommen. Die Aussenränder werden an vier Verbindungsstellen 27 mit dem darunter liegenden mittleren Bereich des Trägerstrangs 11 verbunden, beispielsweise durch Kleben oder Ultraschallschweissen.

Die Wareneinheit 3, 31 ist nun zwischen einem hinteren Trägerelement 21, welches durch den ursprünglichen mittleren Bereich des Trägerstrangs 11 gebildet wird, und den zweiten Trägerelementen 22, 22', welche durch die umgeklappten ursprünglichen Randbereiche des Trägerstrang 11 gebildet werden, formschlüssig gehalten.

Die Perforationslinie 17 quer zur Längsrichtung 10 des Trägerstrangs 11 kann entweder vor dem Umschlagen der Aussenränder 22, 22' angebracht werden, oder vorteilhaft erst nachdem erste und zweite Trägerelemente 21, 22, 22' verbunden sind.

Da durch die gefaltete Längskante und die doppellagigen Trägerelemente 21, 22, 22' die mechanische Steifigkeit gegenüber dem einlagigen Trägerelement 21 aus Figur 1 erhöht wird, kann die Materialdicke des Trägerstrangs reduziert werden, oder an die Wareneinheit angepasst werden.

In einer anderen Variante eines solchen erfindungsgemässen Gebindes 1, dessen Herstellung in Figur 4 gezeigt ist, werden an den späteren Verbindungsstellen der benachbarten Packungseinheiten in den noch nicht umgeklappten Randstreifen 22, 22' Ausschnitte 22a angebracht, welche über die gesamte Breite der zweiten Träger 22, 22' gehen und gegebenenfalls wie gezeigt auch in den Bereich des ersten Trägers 21 hineinreichen können. Die Perforierungslinie 17 ist zwischen den beiden Ausschnitten 22a angeordnet. Klebstoffpunkte 27 werden auf den zweiten Trägerelementen 22, 22' bereitgestellt. Eine solche Ausführungsvariante hat unter anderem den Vorteil, dass sich die zweiten Trägerelemente 22, 22' besser an die Form der Wareneinheit 3 anpassen können, da die zweiten Trägerelemente 22, 22' in Längsrichtung nicht durchgehend sind.

In einer weiteren Variante eines solchen erfindungsgemässen Gebindes kann zwischen den beiden Randbereichen (den späteren zweiten Trägerelementen) und dem mittleren Bereich (dem späteren ersten Trägerelement) des Trägerstrangs jeweils ein zusätzlicher Streifen ausgebildet werden, welcher bei der fertig zusammengeklappten Packungseinheit eine Aussenwand ausbildet. Bei einer solchen Ausführungsform ist ein gewisser Grundabstand zwischen ersten und zweiten Trägerelementen gegeben, was vor allem bei dickeren Wareneinheiten vorteilhaft ist.

Die Randbereiche 22, 22' können auch wesentlich breiter als dargestellt ausgestaltet werden, so dass nach dem Umschlagen der zweiten Trägerelemente 22, 22' die Vorderseite der Packungseinheit geschlossen ist.

Ebenfalls ist es möglich, vor dem Umschlagen der zweiten Trägerelemente 22, 22' auf den Wareneinheiten 3 eine zweite Bahn, beispielsweise eine transparente Folie abzulegen, so dass die fertige Packungseinheit auch nach vorne vollständig geschlossen ist. Diese zweite Bahn muss nicht mit dem Trägerstrang 11 verbunden sein, da sie bei geeigneter Dimensionierung im Gebinde formschlüssig gehalten ist.

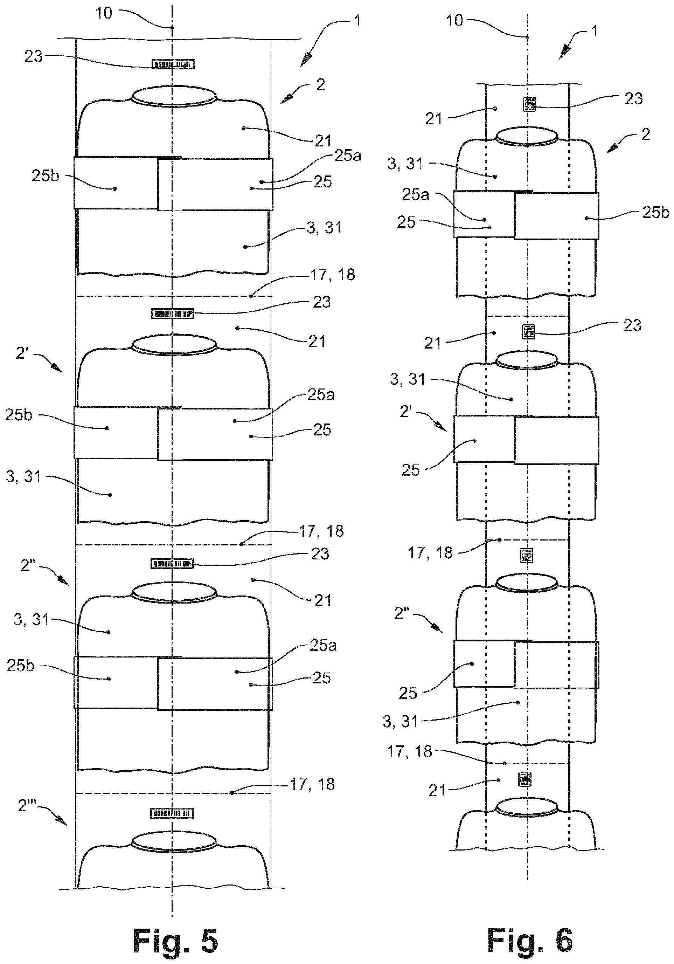

Figur 5 zeigt eine Ausführungsform eines erfindungsgemässen Gebindes 1, bei welchem auf einem einlagigen Trägerstrang 11 Wareneinheiten 3 in Form von Pullovern oder T-Shirts 31 angeordnet sind. Die Befestigung der Wareneinheit erfolgt dabei über eine Banderole 25. Dazu wird ein Banderolestreifen auf dem Trägerstrang 11 befestigt (nicht dargestellt), und die beiden Laschen 25a, 25b werden auf der Vorderseite über der Wareneinheit 3 verschlossen, beispielsweise durch Verkleben der Laschenenden.

Alternativ kann die Banderole auch auf der Frontseite über der Wareneinheit 3 durchgehend ausgestaltet sein, wobei in einem solchen Fall die beiden Enden des Banderole-Streifens um den Trägerstrang 11 umgeschlagen und auf der abgewandten Rückseite auf dem Trägerstrang 11 befestigt werden.

Der Trägerstrang 11 kann auch schmaler als die Wareneinheit 3 ausgestaltet sein, wie in der Variante in Figur 6 beispielhaft gezeigt.

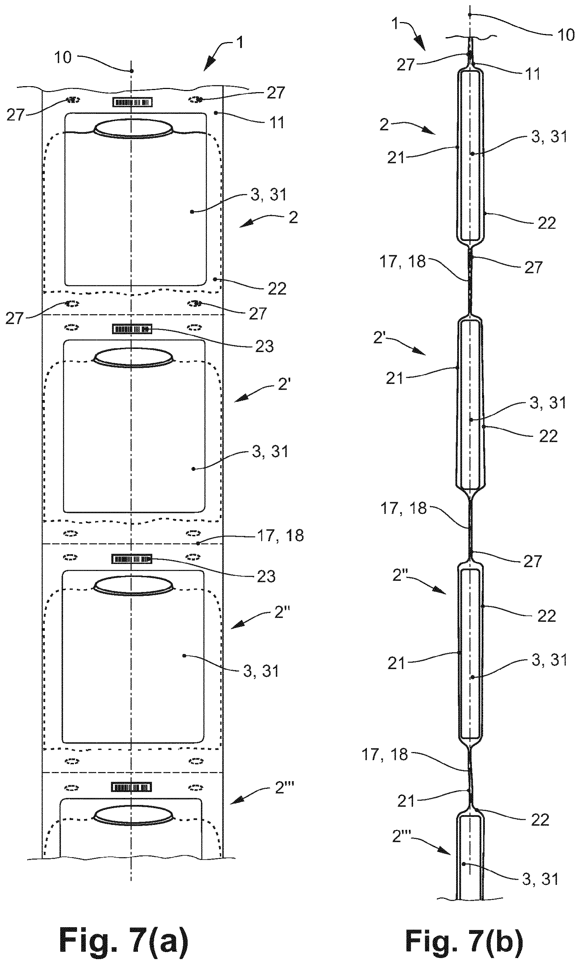

Eine andere Ausführungsvariante eines erfindungsgemässen Gebindes 1, mit einer zweilagigen Ausgestaltung der Packungseinheiten 2, wird anhand der Figur 7 erläutert. Das erste Trägerelement 21 aus einem geeigneten flexiblen Material wird ab Rolle horizontal bereitgestellt. Auf dem ersten Trägerelement 21 werden in regelmässigen Abständen Wareneinheiten 3, beispielsweise in Form von Pullovern oder T-Shirts 31, angeordnet. Darauf wird ein zweites Trägerelement 22 platziert, welches ebenfalls ab Rolle bereitgestellt wird.

An vier Verbindungspunkten 27 pro Packungseinheit 2, 2', 2", 2‴ werden das erste Trägerelement 21 und das zweite Trägerelement 22 zu einem Trägerstrang 11 verbunden, so dass die Wareneinheiten 3 zwischen den beiden Trägerelemente 21, 22 sandwichartig formschlüssig fixiert sind. Zwischen benachbarten Packungseinheiten 2' 2', 2", 2‴ wird jeweils eine Perforierungslinie als Scharnierelement 17 und Sollbruchstelle 18 angebracht.

Im gezeigten Ausführungsbeispiel ist im zweiten Trägerelement 22 ein Sichtfenster ausgespart, durch welches die Wareneinheit 3 sichtbar ist. Dieses Sichtfenster kann alternativ auch weggelassen werden, oder es kann eine durchsichtige Folie im Sichtfester angeordnet sein. Dieses Folie kann beispielsweise auf der Innenseite des zweiten Trägerelements 22 fixiert sein. Da die durchsichtige Folie bei geeigneter Dimensionierung aber innerhalb der Packungseinheit formschlüssig fixiert ist, kann sie auch lediglich auf der Wareneinheit abgelegt sein.

Die beiden Trägerelemente 21, 22 werden aus einem geeigneten Material gefertigt, beispielsweise Papier, welches bandförmig bereitgestellt wird.

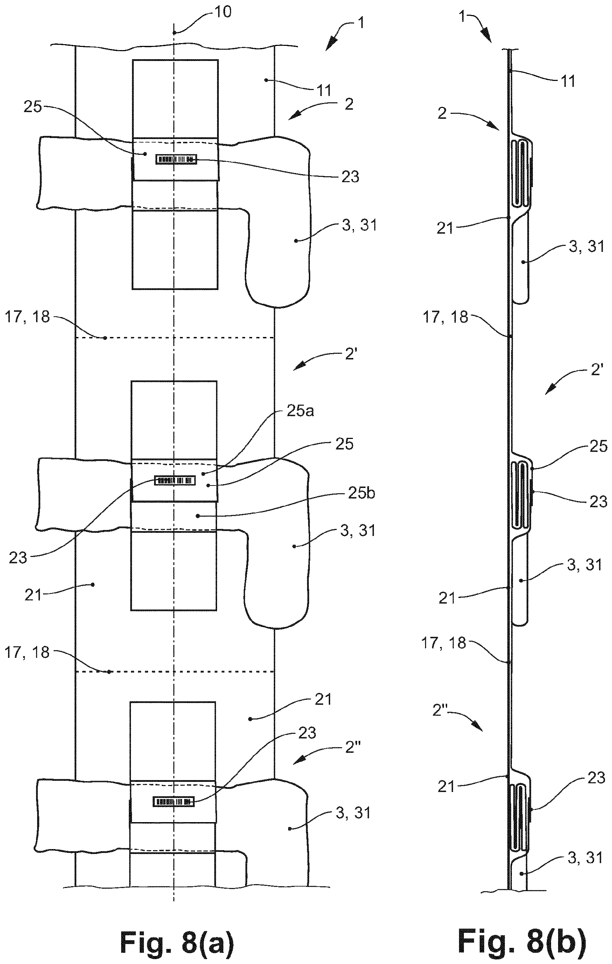

Anhand von Figur 8 wird eine vorteilhafte Ausführungsform eines erfindungsgemässen Gebindes 1 diskutiert, bei welchem die Wareneinheiten 31, wiederum mit Banderolen 25 auf dem Trägerstrang 11 gebildeten Banderolen 25 befestigt sind. Die Banderolen sind dabei aus dem Trägerstrang 11 selbst ausgeformt.

Zu Herstellung eines solchen Gebindes 1 werden bei dem bereitgestellten bandförmigen Trägerstrang 11 aus dem Trägerelement 21 jeder Packungseinheit 2 zwei Laschen 25a, 25b ausgestanzt, jeweils entlang drei Seiten eines Rechtecks. Nach dem Auflegen der Wareneinheit 3, im gezeigten Beispiel einem Sockenpaar 31, in einem Innenbereich zwischen den beiden Laschen 25a, 25b werden die die beiden Laschen 25a, 25b der Banderole 25 gegen den Innenbereich hin um die Wareneinheit 3 umgeschlagen und zu einer Banderole 25 verklebt. Auf der fertigen Banderole 25 wird dann noch ein zweites Datenelement 23 angebracht. Zwischen benachbarten Packungseinheiten 2, 2', 2", 2‴ werden wiederum Perforierungslinien als Sollbruchstellen 18 und/oder Scharnierelemente 17 angebracht.

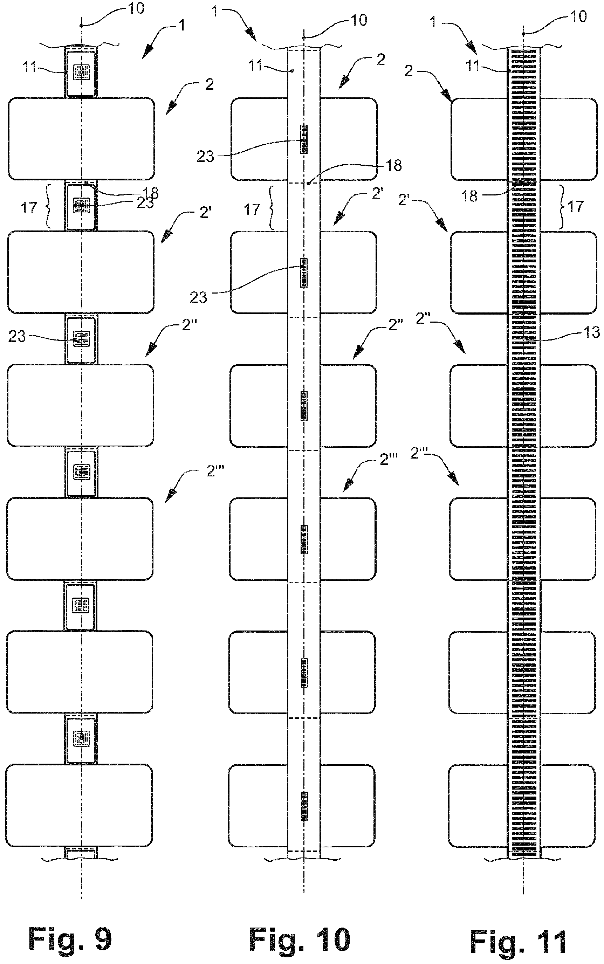

Anstatt wie bei den vorangegangenen Beispielen die Packungseinheiten 2, 2', 2", 2‴ eines erfindungsgemässen Gebindes 1 aus dem Trägerstrang 1 zu erstellen, können die Packungseinheiten auch separat erstellt und danach auf dem Trägerstrang 11 angebracht werden, um so ein erfindungsgemässes Gebinde 1 zu erstellen. So zeigt Figur 9 ein solches Beispiel eines erfindungsgemässen Gebindes. Auf einem schmalen streifenförmigen Trägerstrang 11 sind Packungseinheiten 2, 2', 2", 2‴ befestigt. In den Lücken zwischen den Packungseinheiten sind jeweils zweite Datenelemente 23 in Form eines zweidimensionalen QR-Codes auf dem Trägerstrang 11 angeordnet.

Die genannten Packungseinheiten 2, 2', 2", 2‴ sind als Pakete ausgestaltet, in welchen die Wareneinheiten (nicht sichtbar) angeordnet sind.

Solche erfindungsgemässen Gebinde sind besonders vorteilhaft für Packungseinheiten beziehungsweise Wareneinheiten von beschränkter Grösse und Gewicht, beispielsweise kleinere Haushaltsartikel, Kosmetika, elektronische Geräte und Datenträger, aber beispielsweise auch Medikamente oder Ersatzteile. Für solche Waren ist ein erfindungsgemässen Gebinde 1 vorteilhaft wegen des wesentlich geringeren technischen Aufwands des automatischen Handlings und der Vereinzelung der Waren.

Zur Erstellung eines erfindungsgemässen Gebindes 1 werden vorteilhaft die fertigen Packungseinheiten 2, 2', 2", 2‴ inklusive Inhalt auf dem als Endlosband bereitgestellten Trägerstrang 11 befestigt, beispielsweise aufgeklebt oder angeschweisst. Der mindestens eine entsprechende Verbindungspunkt ist in der Aufsichtsperspektive der Figur nicht sichtbar.

Da die Packungseinheiten 2, 2', 2", 2‴ schon ausreichend mechanisch stabil sind, kann der Trägerstrang 11 flexibel ausgestaltet werden. In solch einem Fall wirkt der ganze Abschnitt des flexiblen Trägerstrangs 11 zwischen zwei benachbarten Packungseinheiten als Scharnierelement 17. Im gezeigten Beispiel ist auf dem Trägerstrang 11 jeder Packungseinheit 2 noch eine Sollbruchstelle 18 zugeordnet. Diese kann jedoch alternativ auch weggelassen werden. So kann beispielsweise zum Abtrennen einer einzelnen Packungseinheit der relative schmale Trägerstrang 11 zwischen zwei Packungseinheiten einfach durchschnitten werden.

Alternativ ist es auch möglich, die Verbindung zwischen Trägerstrang und Packungseinheiten anders zu lösen, indem beispielsweise eine Packungseinheit seitlich abgestützt gefördert und gleichzeitig der Trägerstrang nach unten weggezogen wird, so dass die Packungseinheit vom Trägerstrang abgeschält oder abgerissen wird. Der nicht mehr benötigte Trägerstrang kann dann nochmals verwendet oder rezykliert werden.

Anstatt als mechanisch stabiles Objekt können die Packungseinheiten beispielsweise auch als Beutel ausgestaltet sein.

Alternativ oder zusätzlich können auch auf der Rückseite des Trägerstrangs 11 zweite Datenelemente 23 vorgesehen sein, wie in Figur 10 beispielhaft dargestellt.

Figur 11 zeigt ein erfindungsgemässes Gebinde 1 analog zu Figur 9, bei welchem auf der Rückseite des Trägerstrangs 11 Positionsmarkierungen in Form eines Strichmusters angebracht sind. Durch Registrieren und Zählen der Strichmarkierungen mit einem geeigneten Sensor beim Fördern des Gebindes 1 entlang der Längsrichtung 10 kann so die aktuelle Position in Bezug auf den gesamten Trägerstrang bestimmt werden.

Die in den vorgenannten Figuren gezeigte Ausführungsvariante mit funktionell getrennten Packungseinheiten und Trägerstrang kann auch für grössere Packungseinheiten eingesetzt werden. Ohne nachteiligen Einfluss auf den vorgesehen Verwendungszweck kann der Trägerstrang dabei materialsparend ausgestaltet werden, indem der Trägerstrang zweiteilig oder mehrteilig ausgeführt wird.

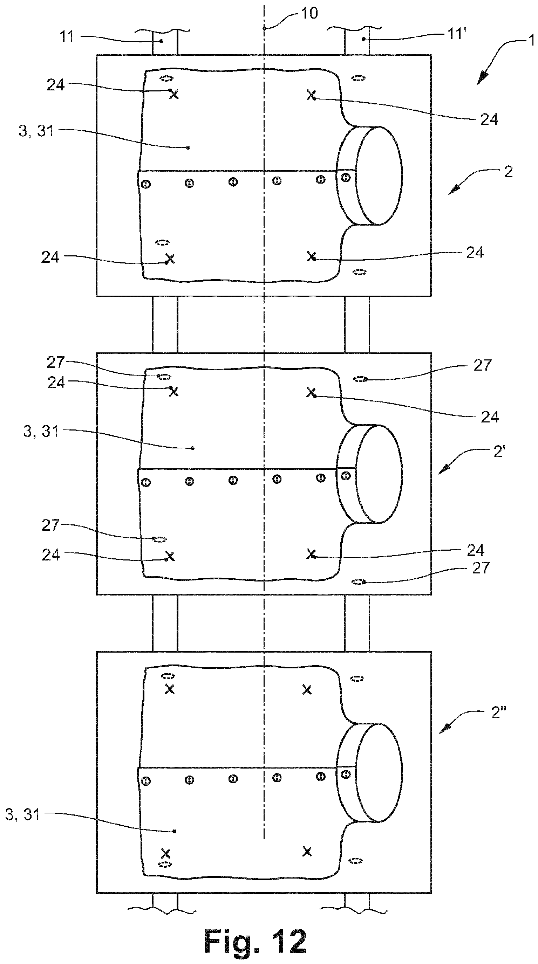

Eine solche Ausführungsvariante eines erfindungsgemässen Gebindes 1 ist in Figur 12 dargestellt. Zwei streifenförmige Trägerstränge 11, 11' sind parallel zu einer Längsrichtung 10 geführt. Eine Packungseinheit 2, 2' ist jeweils an vier Verbindungspunkten 27 mit den Trägersträngen 11, 11' verbunden.

Im gezeigten Beispiel umfassen die Packungseinheiten 2, 2' ein mechanisch stabiles Trägerelement 21, auf welchem eine Wareneinheit 3 in der Form eines Hemdes 31 an vier Befestigungspunkten reversibel fixiert ist. Alternativ können die Packungseinheiten aber auch als Pakete, Beutel oder andere geschlossene Behälter ausgestaltet sein.

Das in Figur 12 gezeigte Ausführungsbeispiel eines erfindungsgemässen Gebindes 1 ist besonders dazu geeignet, die Packungseinheiten 2, 2' mechanisch wieder von den Trägersträngen 11, 11' zu lösen. Beispielsweise können die Packungseinheiten eines zugeführten Gebindes auf einem oder mehreren horizontalen, parallel zur Längsrichtung 10 verlaufenden Bandförderern platziert werden. Werden dann die Trägerstränge 11, 11' nach unten vom Bandförderer weggeführt, reissen die Trägerstränge an den Verbindungspunkten 27 von der Packungseinheit ab. Die nun vereinzelte Packungseinheit kann auf dem Bandförderer weitergefördert werden, ums anschliessend beispielsweise in einen bereitstehenden Transportbehälter eines Intralogistik-Fördersystems eingebracht zu werden.

Neben der vereinfachten Förderung haben erfindungsgemässe Gebinde 1 auch den Vorteil, dass sie für den Transport vom Hersteller zu einer Intralogistik-Anlage effizient in einem Transportbehälter 19 gelagert und anschliessend zur weiteren Verwendung auch wieder automatisiert entnommen werden können, was anhand von Figur 13 erläutert wird.

Ein Gebinde analog zu Figur 9 wird in einen Behälter 19 in Form einer Kartonkiste eingelagert, indem das Gebinde 1 lagenweise in der Art eines Leporello abgelegt wird. Die Entnahme des Gebindes 1 aus der Transportkiste 19 erfolgt dann in umgekehrter Reihenfolge.

Die Masse der Packungseinheiten 2, der Kiste 19 und der Abstände der Packungseinheiten zueinander auf dem Trägerstrang 11 sind vorteilhaft so aufeinander abgestimmt, dass eine möglichst hohe Packungsdichte erzielt wird. Vorteilhaft sind die Packungseinheiten einer Lage jeweils auf den Packungseinheiten der darunterliegenden Lage abgestützt.

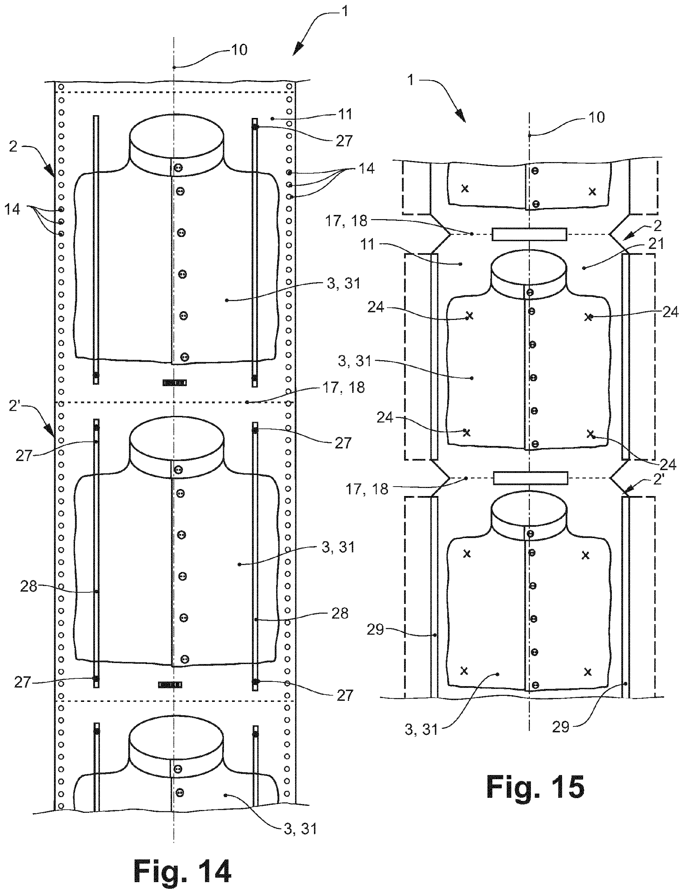

Ein weiteres Ausführungsbeispiel eines erfindungsgemässen Gebindes 1 ist in Figur 14 dargestellt. Auf einem Trägerstrang 11, der analog zu Figur 1 als eine integrale Kette von einzelnen, durch Sollbruchstellen 18 voneinander abgetrennten Trägerelementen 21 ausgestaltet ist, sind Wareneinheiten 3 in Form von Hemden 31 angeordnet. Die Wareneinheiten sind dabei durch Klemmelemente 28 auf dem Trägerelement 21 befestigt. Solche Klemmelemente können beispielsweise als elastische, gedehnte Bänder, beispielsweise elastische Schnüre oder als elastische stangenförmige Elemente, ausgestaltet sein, die an Verbindungspunkten 27 mit dem Trägerelement 21 verbunden sind.

Funktionell unabhängig von dieser Variante der Befestigung der Wareneinheiten 3 auf den Trägerelementen 21 der Packungseinheiten 2 ist der Trägerstrang 11 an den Aussenrändern mit Förderwirkelementen in Form von Lochstreifen 14 versehen. Entsprechende Fördermittel, beispielsweise in Form von Nadelrädern, können mit diesen Lochstreifen in Wirkverbindung treten, um eine präzise und zuverlässige Förderung des Gebindes 1 entlang der Längsrichtung 10 sicherzustellen.

Noch eine andere Variante eines erfindungsgemässen Gebindes 1 ergibt sich aus der Figur 15. Der Trägerstrang 11 ist wiederum als Kette von an Perforationslinien 17 miteinander verbundenen Packungseinheiten 2 ausgestaltet. In der Mitte der Perforationslinie 17 ist im Material des Trägerstrangs 11 beziehungsweise der Trägerelemente 21 eine rechteckige Ausnehmung vorgesehen, welche beispielsweise durch Ausstanzen hergestellt werden kann. Dies führt einer weiteren mechanischen Schwächung der Verbindungsstelle der Packungseinheiten, was zur Optimierung der Funktion des Scharnierelements 17 beziehungsweise der Sollbruchstelle 18 verwendet werden kann. An den Rändern sind dreieckige Ausnehmungen vorgesehen, welche die gleiche Wirkung haben.

Um die Materialstärke des Trägerstrangs 11 minimieren zu können, und dennoch die notwendige mechanische Steifigkeit des Trägerelements 21 zu erreichen, sind an den Aussenrändern der Trägerelemente 21 Versteifungselemente 29 angeordnet. Diese werden hergestellt, indem ein entsprechender lateraler Abschnitt des Trägerstrangs 11 (gestrichelt dargestellt) mit Klebstoff versehen und von aussen nach innen zu einer dünnen, aber biegesteifen Röhre 29 aufgerollt wird.

Alternativ kann ein solches Versteifungselement auch einen dreieckigen oder viereckigen Querschnitt aufweisen. Anstatt einer Klebeverbindung können auch formschlüssige Fixierungen vorgesehen sein, wie beispielsweise Stecklaschen-Verbindungen.

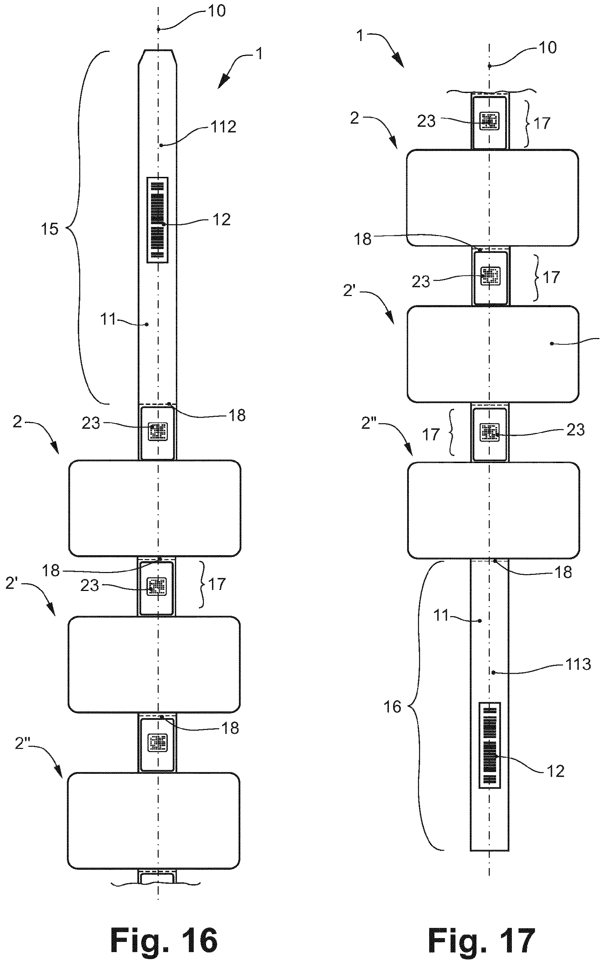

Figur 16 zeigt eine mögliche Ausgestaltung eines Anfangsbereichs 112 des erfindungsgemässen Gebindes 1 aus Figur 9. Am ersten Ende 112 ist ein Startelement 15 vorgesehen, in Form eines Abschnitts des Trägerstrangs 11 ohne Packungseinheiten. Die Spitze des Startelements 15 ist verjüngt, um das Einführen des Startelements 15 in eine Verarbeitungs- oder Fördervorrichtung zu erleichtern.

Auf dem Startelement 15 ist ein erstes Datenelement 12 in Form eines eindimensionalen Barcodes angeordnet. Dieses erste Datenelement 12 ist logisch dem gesamten Gebinde zugeordnet, und kann beispielsweise Informationen zur Länge des Gebindes, der Art und Anzahl Packungseinheiten, der darin enthaltenen Wareneinheiten, deren Position in Bezug auf den Trägerstrang, etc. enthalten. Es ist auch möglich, darin Daten bereitzustellen, die es einer Verarbeitungsvorrichtung erlauben, sich an das spezifische Gebinde anzupassen und die Maschineneinstellungen und Verfahrensparameter entsprechend einzustellen. Auf diese Weise ist es möglich, eine Verarbeitungsvorrichtung, wie beispielsweise eine erfindungsgemässe Vorrichtung 6 zum Einbringen von Wareneinheiten in einen Transportbehälter, so zu realisieren, dass sie mehr als einen Typ von erfindungsgemässen Gebinden 1 verarbeiten kann. Die korrekte Einstellung kann dabei automatisch geschehen, so dass möglichst ohne manuelle Umstellungsarbeiten und mit minimalen Standzeiten verschiedene Arten und Typen von erfindungsgemässen Gebinden 1 verarbeitet werden können.

An einem zweiten Ende 113 eines erfindungsgemässen Gebindes 1 kann analog ein Abschlusselement 16 vorgesehen sein, wie in Figur 17 gezeigt. Ein solches zweites Datenelement 12 erlaubt es beispielsweise, das Ende des Gebindes 1 anzuzeigen. Es kann auch Informationen enthalten, welche die Verifizierung des soeben verarbeiteten Gebindes 1 erlauben, um beispielsweise Verarbeitungsfehler zeitnah zu entdecken und korrigieren zu können.

Eine vorteilhafte Ausführungsform einer erfindungsgemässen Vorrichtung 6 zum Einbringen von Wareneinheiten 3 in einen Transportbehälter 8 ist in Figur 18 schematisch dargestellt.

Ein bereitgestelltes erfindungsgemässes Gebinde 1 in einem Transportbehälter 19 gemäss Figur 13 wird bereitgestellt. Im gezeigten Ausführungsbeispiel erfolgt die Bereitstellung auf einem Bandförderer 921 eines Fördersystems. Alternativ kann der Transportbehälter 19 mit dem Gebinde 1 auch manuell bereitgestellt werden.

Das bereitgestellte erfindungsgemässe Gebinde 1 wird über eine Umlenkrolle 611 eines Zuführmoduls 61 der erfindungsgemässen Vorrichtung 6 auf eine Liegefördervorrichtung 613 des genannten Zuführmoduls in Form eines Bandförderers 612 geleitet. Der Vortrieb des Gebindestranges erfolgt dabei über nicht dargestellte Antriebsmittel. Ein Identifikationsmodul 65 der Vorrichtung 6 ist dazu ausgestattet, an einer Identifikationsposition 659 mit einer Kamera 653 das Datenelement 23 jeder Packungseinheit 2 auszulesen. Vorteilhaft kann anhand des aufgenommen Bilds auch die Identität der Packungseinheit 2 mit dem ausgelesenen Datenelement 23 abgeglichen und verifiziert werden. Ein Abtrennmodul 62 ist dazu vorgesehen, eine Packungseinheit 2' vom Gebinde 1 abzutrennen, indem es den Trägerstrang 11 an der Sollbruchstelle durchtrennt.

Die abgetrennte Packungseinheit wird zu einem Einbringmodul 63 der Vorrichtung 6 gefördert, beispielsweise mit einem Bandförderer oder schwerkraftgetrieben auf einer Rutsche 631. Beim Einbringmodul 63 gelangt die Packungseinheit 2" auf eine Fördervorrichtung 631, beispielsweise eine Rutsche, welche die Packungseinheit in eine Öffnung eines Transportbehälter 8 gleiten lässt, im vorliegenden Beispiel in eine Hängefördertasche 81 eines Hängefördersystems 91.

Die Hängefördertasche 81 wird durch ein Bereitstellungsmodul 64 der erfindungsgemässen Vorrichtung von einem geschlossenen Zustand (nicht dargestellt) in einen geöffneten Befüllungszustand überführt. Ein mögliches Beispiel eines geeigneten solchen Bereitstellungsmoduls ist beispielsweise in US 2019/0367282 A1 offenbart.

Während eine leere Hängefördertasche 81, bereits in der für die Befüllung vorgesehenen Orientierung, an einem in einer Laufschiene 911 geführten Laufwagen 82 hängend herangefördert wird, wird der Boden der Hängefördertasche durch eine Abfolge von rollenförmigen Aktuatoren 642 angehoben, wodurch die Hängefördertasche geöffnet wird. Ein seitliches Stoppelement 641 stabilisiert die Hängefördertasche horizontal, quer zur Förderrichtung des Hängefördersystems. Die Hängefördertasche wird angehalten und mittels eines Stoppelements 643 in Bezug auf die Laufschiene 911 fixiert. Die Hängefördertasche ist nun im Befüllungszustand. Die vom erfindungsgemässen Gebinde 1 abgetrennte Packungseinheit 2" kann in die Hängefördertasche 81 eingebracht werden. Nach dem Befüllen gibt das Stoppelement 643 die Hängefördertasche 81 wieder frei. Die befüllte Hängefördertasche 81 wird im Hängefördersystem 91 weitergefördert, und die nächste, leere Hängefördertasche zum Befüllen herangeführt.

Es können auch zwei oder mehr abgetrennte Packungseinheiten 2, 2', 2" nacheinander in eine zur Befüllung bereitstehende Hängefördertasche 81 eingebracht werden.

Vorteilhaft wird die zuvor mit dem Identifikationsmodul festgestellte Identität einer Packungseinheit, die in eine Hängefördertasche eingebracht wird, mit der Identität der entsprechenden Hängefördertasche verknüpft, beispielsweise in einer Datenbank der Hängeförderanlage.

Insbesondere kann zu diesem Zweck mit einer geeigneten Vorrichtung (nicht dargestellt) die Identität der Hängefördertasche bestimmt werden. Dies kann vor, während oder nach dem Befüllen erfolgen. Beispielsweise kann eine eindeutige Identifikationsnummer aus einem der Hängefördertasche zugeordneten optischen Datenelement, wie zum Beispiel ein Barcode oder ein QR-Code, oder einem RFID-Element, durch ein entsprechendes Auslesegerät (Barcode-Scanner, Kamera, RFID-Leseeinheit) ausgelesen werden.

Alternativ oder zusätzlich kann die Identität einer in eine Hängefördertasche eingebrachten Packungseinheit in eine Datenspeicher-Einheit der Hängefördertasche geschrieben werden. Beispielsweise kann ein entsprechender Eintrag mit einer geeigneten Sendeeinheit in ein beschreibbares RFI D-Element der Hängefördertasche eingeschrieben werden.

Eine erfindungsgemässe Vorrichtung 6 ist vorteilhaft in ein Fördersystem 9, insbesondere ein Fördersystem einer Intralogistik-Anlage 7 integriert, wie exemplarisch in Figur 19 als Schema dargestellt. Erfindungsgemässe Gebinde 1 werden von einem externen Hersteller zu einem Wareneingang 72 transportiert. Im Wareneingang 72 werden die Gebinde 1 dann direkt in eine erfindungsgemässe Vorrichtung 6 eingespeist, welche die vereinzelten Packungseinheiten mit den darin gelagerten Wareneinheiten dann in Transportbehälter des entsprechenden Fördersystems 9 leitet. Die derart befüllten Transportbehälter 9 können dann anschliessend in einem Warenlager 71 zwischengespeichert werden, oder sie werden einem Kommissionierungssystem 73 zugeführt, welches komplettierte Aufträge dann einem Warenausgang 74 zuführt.

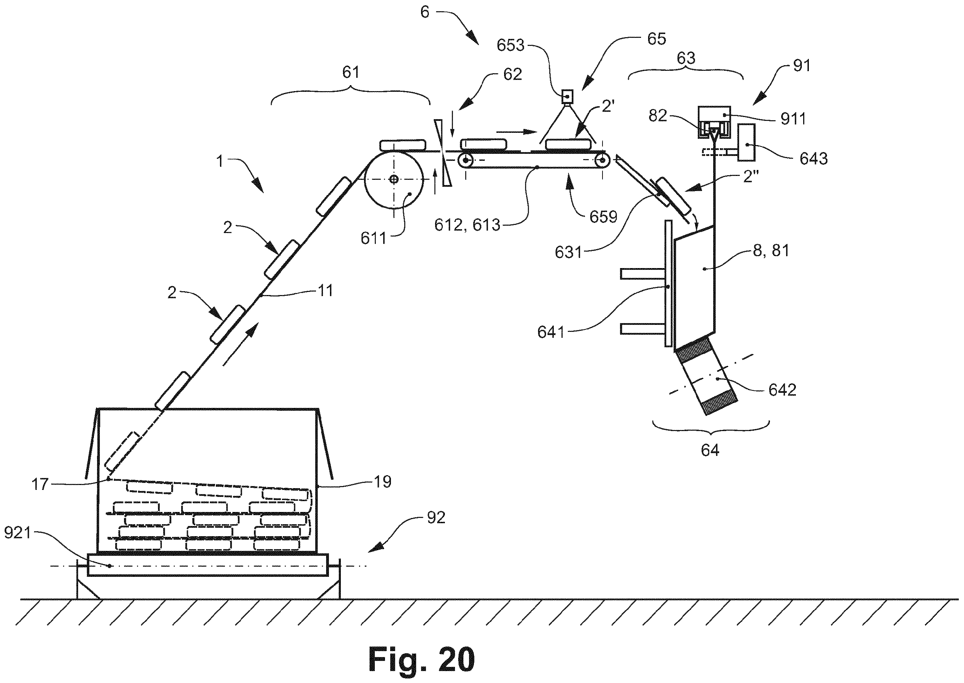

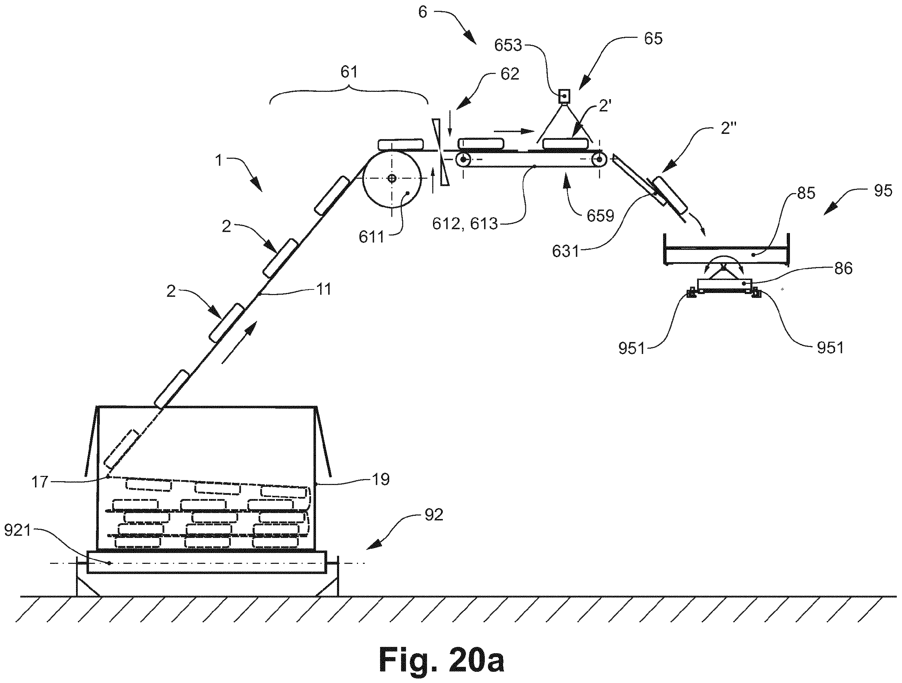

Eine weitere vorteilhafte Ausführungsform einer erfindungsgemässen Vorrichtung 6 zum Einbringen von Wareneinheiten 3 in einen Transportbehälter 8 ist in Figur 20 schematisch dargestellt. Diese Vorrichtung entspricht in einigen Teilen der Vorrichtung aus Figur 18, und auf die diesbezüglichen Ausführungen wird zur Vermeidung von Wiederholungen Bezug genommen.

Das bereitgestellten Gebinde 1 wird über eine Umlenkrolle 611 eines Zuführmoduls 61 der Vorrichtung 6 auf eine Liegefördervorrichtung 613 des Zuführmoduls 61 in Form eines Bandförderers 612 geleitet. Eine Abtrennmodul 62, welches dazu vorgesehen ist, eine Packungseinheit 2' vom Gebinde 1 abzutrennen, indem es den Trägerstrang 11 an der Sollbruchstelle durchtrennt, ist zwischen der Umlenkrolle 611 und dem Bandförderer 612 angeordnet. Das so vereinzelte und auf dem Bandförderer 612 liegende Packungselement 2' wird dann weiter gefördert. Ein Identifikationsmodul 65 der Vorrichtung 6 liest mit einer Kamera 653 das Datenelement 23 der Packungseinheit 2' aus. Vorteilhaft kann wiederum anhand des aufgenommen Bilds die Identität der Packungseinheit 2 mit dem ausgelesenen Datenelement 23 abgeglichen und verifiziert werden.

Die abgetrennte Packungseinheit gelangt anschliessend über eine Rutsche 631 des Einbringmoduls 63 der Vorrichtung 6 gleitend in die Hängefördertasche 81 eines Hängefördersystems 91.

Eine weitere vorteilhafte Ausführungsform einer erfindungsgemässen Vorrichtung 6 zum Einbringen von Wareneinheiten 3 in einen Transportbehälter 8 ist in Figur 20a schematisch dargestellt. Diese Vorrichtung entspricht in Bezug auf die Vorrichtung 6 zum Einbringen von Wareneinheiten der Figur 20, und auf die diesbezüglichen Ausführungen wird zur Vermeidung von Wiederholungen Bezug genommen.

Die abgetrennte Packungseinheit wird zu einem Einbringmodul 63 der Vorrichtung 6 gefördert. Beim Einbringmodul 63 gelangt die Packungseinheit 2" auf eine Fördervorrichtung 631 in Form einer Rutsche, welche die Packungseinheit in eine Öffnung eines Transportbehälter 8 gleiten lässt, im vorliegenden Beispiel in eine Förderschale 81 eines Kippschalenförderers 95.

Bei solchen aus dem Stand der Technik bekannten Kippschalenfördersystemen 95 sind auf ein oder zwei Seiten quer zur Förderrichtung kippbare Förderschalen 85 auf Laufwagen 86 montiert, welche in einer Laufschiene 951 rollend geführt sind. Die voneinander gleichmässig beanstandeten Laufwagen 86 sind an einen umlaufenden Kettenantrieb (nicht dargestellt) gekoppelt und laufen mit konstanter Geschwindigkeit.

Der Bandförderer 612 wird vorteilhaft so gesteuert, dass eine Packungseinheit immer dann auf die Rutsche 631 gelangt, wenn sich eine Förderschale 85 des Kippschalenförderers 95 darunter befindet.

Alternativ oder zusätzlich kann auch am Ende der Rutsche 631 ein Stoppelement vorgesehen sein, beispielsweise in Form einer hochschwenkbaren Klappe am Ende der Rutsche, welche im hochgeschwenkten Zustand eine Packungseinheit auf der Rutsche zurückhalten kann. Die Klappe wird heruntergeklappt wenn sich unterhalb der Rutsche eine Förderschale des Kippschalenförderers befindet, und die zurückgehaltene Packungseinheit auf der Rutsche fällt in die Förderschale.

Bei den obenstehend diskutierten Vorrichtungen 6 kann das Zuführmodul 61 vor und/oder nach dem Bandförderer 612 eine oder mehrere in Serie angeordnete Liegeförderer-Einheiten aufweisen, die selektiv angesteuert werden können. Auf diese Weise kann ein vorteilhafter Pufferspeicher realisiert werden, welcher eine Synchronisation der Bereitstellung der Packungseinheiten und der Hängefördertaschen erleichtert.

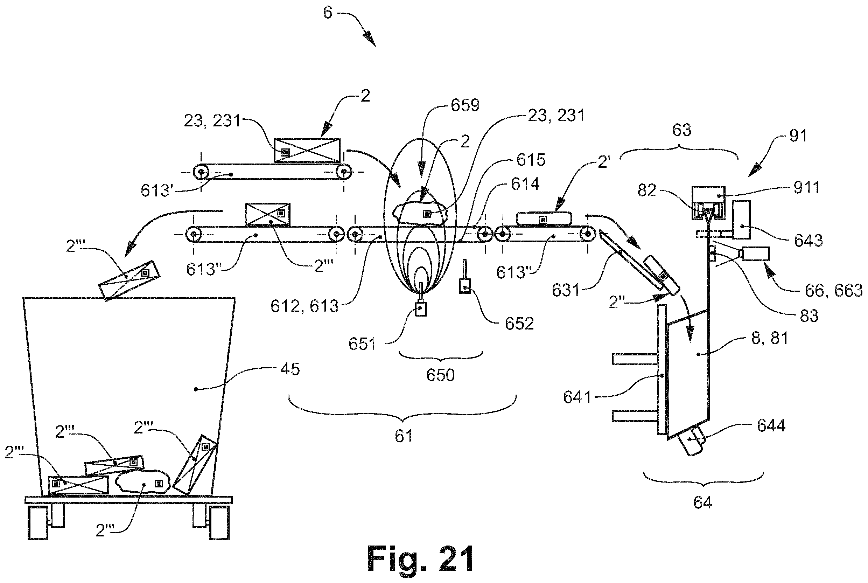

Eine weitere erfindungsgemässe Vorrichtung 6 zum Einbringen von Wareneinheiten in einen Transportbehälter ist in Figur 21 dargestellt.

Mit einer Liegefördervorrichtung 613' wird eine Liegewareneinheit in Form einer Packungseinheit 2 zugefördert und fällt auf das Zuführmodul 61 umfassend eine Liegefördervorrichtung 613 in Form eines Bandförderers 612. Auf dem Bandförderer 612 wird die Packungseinheit 2 zu Identifikationsposition 659 gefördert, so dass die Packungseinheit 2 im Detektionsbereich der RFID-Leseeinheit 650 liegt.

Die RFID-Leseeinheit weist einen RF-Sender 651 und einen RF-Empfänger 652 auf, welche beide unterhalb dem Zuführmodul 61 angeordnet sind. Mit dem RF-Sender 651 wird das Datenelement 23 in Form eines passiven RFID-Transponders, welcher auf der Packungseinheit 2 angeordnet ist, in Betrieb gesetzt, welcher daraufhin Identifikationsdaten aussendet. Diese Identifikationsdaten werden vom RF-Empfänger 652 empfangen und an eine Steuervorrichtung (nicht dargestellt) weitergegeben.

Wenn die Identifikation der der Packungseinheit 2 auf dem Zuführmodul 61 erfolgreich ist, wird diese nach rechts auf eine weitere Liegefördervorrichtung 613" weitergefördert, welche die Packungseinheit 2' schliesslich auf eine Rutsche 631 eines Einbringmoduls 63 übergibt, auf welcher die Packungseinheit 2" in eine bereitgestellte Hängefördertasche 81 gleitet. Wie bei den vorangegangenen Figuren umfasst die Hängefördertasche 81 einen Laufwagen 82, welcher in einer Laufschiene 911 des Hängefördersystems 91 geführt ist.

Im Gegensatz zu den Figuren 18 und 20 wird die Hängefördertasche 81 nicht durch Rollen in die geöffnete Stellung gebracht, sondern durch eine entlang des Förderpfads des Hängefördersystems angeordnete Führungsschiene 644. Die am Laufwagen 82 aufgehängte Transporttasche der Hängefördertasche 81 weist an einem obere Ende ein auslesbares Datenelement 83 auf, welches eine Identifikation der Hängefördertasche 81 erlaubt. Im gezeigten Beispiel ist das Datenelement als optisch auslesbares Datenelement, zum Beispiel als Barcode oder QR-Code ausgestaltet. Dieses Transportbehälter-Datenelement 83 kann durch eine Kamera 663 eines zweiten Identifikationsmoduls 66 ausgelesen werden. Alternativ kann das Datenelement 83 auch als RFID-Element realisiert sein, welches durch eine RFID-Leseeinheit des zweiten Identifikationsmoduls 66 ausgelesen werden kann.

Wenn die Identifikation einer Packungseinheit 2 auf dem Zuführmodul 61 fehlschlägt, oder wenn ein anderer Sonderfall eintrifft, wird die Packungseinheit 2 stattdessen nach links auf eine Liegefördervorrichtung 613' gefördert. Diese Liegefördervorrichtung 613' übergibt die Packungseinheit 2‴ schliesslich an einen Sammelbehälter 45. Im gezeigten Beispiel wirft die Liegefördervorrichtung 613' die Packungseinheit 613' in einen Trolley 45.

Die gezeigte Ausführungsform einer erfindungsgemässen Vorrichtung 6 hat insbesondere den Vorteil, dass bei einer fehlgeschlagenen Identifikation der daraus folgende Fehlerzustand der Vorrichtung 6 schnell aufgelöst werden kann. Das erste Identifikationsmodul 61 kann schnell wieder freigegeben werden, ohne dass ein manueller Eingriff notwendig wird. Die resultierenden Stillstandzeiten sind minimal.

Die so in den Sammelbehälter 45 aussortierten Packungseinheiten 2‴ können dann später manuell überprüft und gegebenenfalls wieder in das Intralogistiksystem eingespeist werden. Eine fehlgeschlagene Identifikation einer Packungseinheit kann beispielsweise auf ein beschädigtes oder fehlendes Datenelement zurückzuführen sein.

Die gezeigte Vorrichtung 6 kann auch verwendet werden, um gewisse Packungseinheiten aus dem Logistiksystem zu entfernen, beispielsweise bei Rückrufaktionen oder bei abgelaufenem Haltbarkeitsdatum.

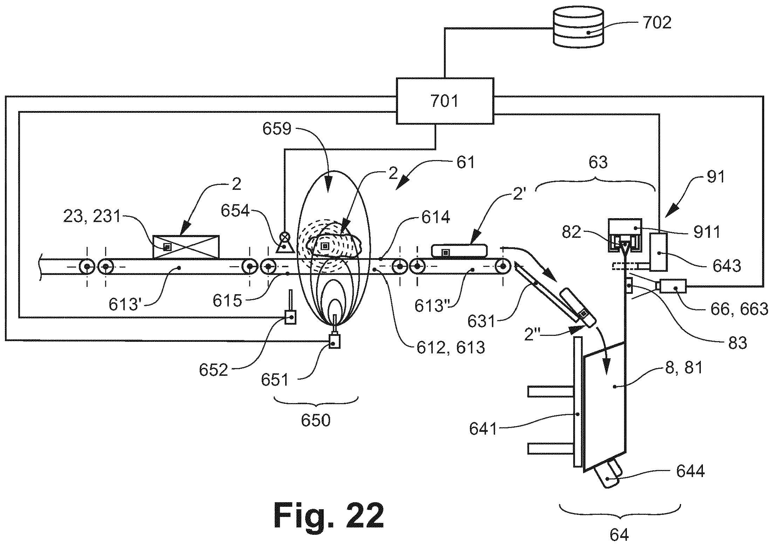

Figur 22 zeigt eine weitere vorteilhafte Ausführungsvariante einer erfindungsgemässen Vorrichtung 6 zum Einbringen von Wareneinheiten in einen Transportbehälter.

Packungseinheiten 2 werden von links auf den Bandförderer 612 des Zuführungsmoduls 61 gefördert. Im gezeigten Ausführungsbeispiel erfolgt die Zuführung über mindestens zwei Liegefördervorrichtungen 613'. Durch gezieltes Anhalten und Anfahren dieser Liegefördervorrichtungen 613' können Packungseinheiten 2 zwischengeparkt werden, wodurch ein Pufferspeicher für Wareneinheiten realisiert werden kann.

Eine Lichtschrankenvorrichtung 654 quer zur Förderrichtung detektiert eine auf dem Bandförderer 612 des Zuführmoduls 61 ankommende Packungseinheit 2. Unter Berücksichtigung der Fördergeschwindigkeit des Bandförderers 612 kann so der Standort der Packungseinheit 2 auf dem Bandförderer 612 sowie die Längsausdehnung in Förderrichtung bestimmt werden. Dies erlaubt eine korrekte Positionierung der Packungseinheit 2 an der Identifikationsposition 659 des ersten Identifikationsmoduls 65. Die RFID-Leseeinheit 650 ist unterhalb des Bandförderers 612 angeordnet.

Die verschiedenen Untereinheiten und Module der Vorrichtung 6 werden durch eine Steuerungseinheit 701 gesteuert und übermitteln Daten an die Steuerungsvorrichtung 701. Die Steuerungsvorrichtung 701 weist eine Datenbank 702 auf, auf welcher beispielsweise die logischen Verknüpfungen zwischen Transportbehälter und Wareneinheiten gespeichert werden können.

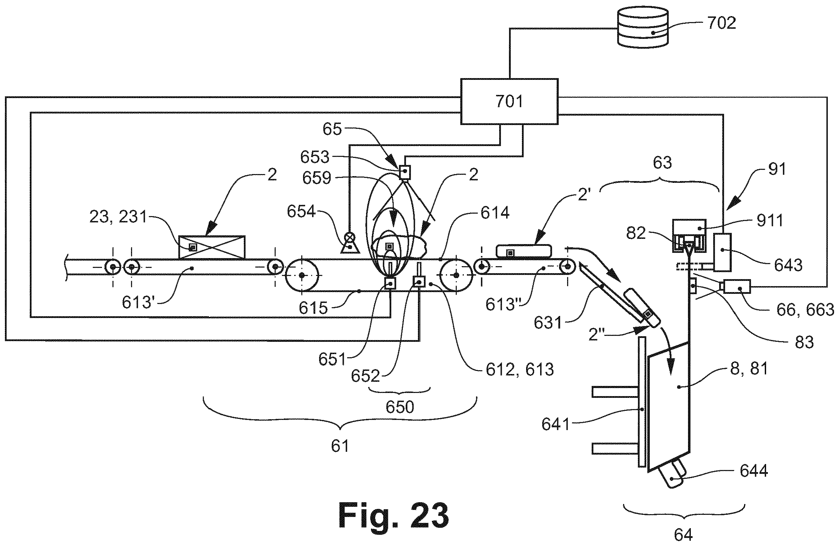

Die in Figur 23 gezeigte Vorrichtung 6 entspricht teilweise der Vorrichtung aus Figur 22. Der Bandförderer 612 weist einen grösseren vertikalen Abstand zwischen der unteren Bandebene 615 und der oberen Bandebene 614 auf als die anderen Liegefördervorrichtungen 613', 613". Dies ermöglicht es, den RF-Sender 651 und den RF-Empfänger 652 der RFI D-Leseeinheit 650 zwischen den beiden Bandebenen 614, 615 nahe an der oberen Bandebene 614 anzuordnen, auf der die Packungseinheit 2 aufliegt.

Das erste Identifikationsmodul 65 weist weiter eine optische Leseeinheit 653 mit einer Kamera auf. Diese Kombination von RFID-Leseeinheit 650 und optischer Leseeinheit 653 erlaubt die Verarbeitung von Packungseinheiten mit verschiedenen Typen von Datenelementen 23.

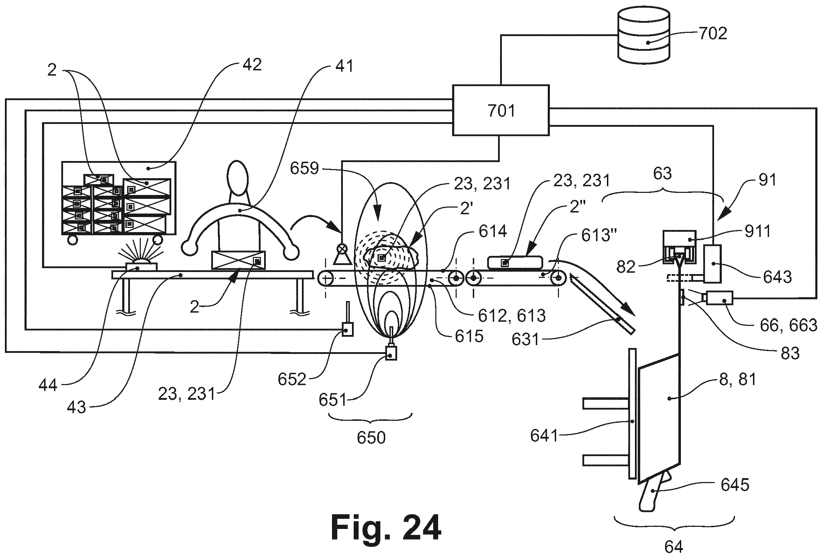

Eine manuell mit Packungseinheiten 2 beschickbare Ausführungsform einer erfindungsgemässen Vorrichtung 6 ist in Figur 24 gezeigt. Eine Bedienperson 41 entnimmt eine Packungseinheit 2 aus einem Trolley mit bereitgestellten Packungseinheiten 42 und legt diese auf einem Arbeitstisch 43 ab. Der Arbeitstisch 43 kann beispielsweise ein Rollenbahntisch oder ein Kugelrolltisch sein.

Eine mit der Steuerungseinheit 701 verbundene Signalleuchte 44 zeigt der Bedienperson 41 an, dass sie die Packungseinheit 2 an das angrenzende Zuführmodul 61 übergeben soll, beispielsweise durch ein grünes Licht. Ist das Zuführmodul durch eine Packungseinheit 2 besetzt, so kann dies der Bedienperson 41 beispielsweise durch ein gelbes Licht der Signalleuchte 44 angezeigt werden. Tritt ein Fehler auf, zum Beispiel weil die Identifikation der Packungseinheit 2' fehlgeschlagen ist, so kann dies der Bedienperson 41 durch ein rotes Licht der Signallampe 44 angezeigt werden. Der Benutzer 41 kann dann die entsprechende Packungseinheit 2 vom Zuführmodul 61 entfernen.

Die Aufgaben des Benutzers 41 können gegebenenfalls auch durch eine Robotereinheit erledigt werden.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Vorrichtung (6) zum Einbringen von Liegewareneinheiten (2, 3, 31) in einen Transportbehälter (8, 81); mit
einem Einbringmodul (63) zum Einbringen von Liegewareneinheiten (2, 3, 31) in einen Transportbehälter (8, 81);
einem Zufördermodul (61) zur Zuförderung von Liegewareneinheiten (2, 3, 31) zu dem Einbringmodul (63); und
einem ersten Identifikationsmodul (65) zum Identifizieren von Liegewareneinheiten (2, 3, 31);
wobei das Zufördermodul (61) eine Liegefördervorrichtung (613) umfasst, mit welchem Liegewareneinheiten entlang eines Förderpfades förderbar sind;
und wobei das Identifikationsmodul (65) dazu eingerichtet ist, die Identität einer Liegewareneinheit zu bestimmen.

2. Vorrichtung nach Anspruch 1, wobei das erste Identifikationsmodul (65) eine optische Leseeinheit (653) und/oder eine RFID-Leseeinheit (650) umfasst.

3. Vorrichtung nach Anspruch 2, wobei eine RFID-Leseeinheit (650) des Identifikationsmoduls (65) unterhalb des Zufördermoduls (61) angeordnet ist.

4. Vorrichtung nach Anspruch 3, wobei das Zufördermodul (61) einen Bandförderer (612) mit einer oberen Bandebene (614) und einer unteren Bandebene (615) umfasst, und ein RF-Sender (652) und/oder ein RF-Empfänger (652) einer RFID-Leseeinheit (650) des Identifikationsmoduls (65) zwischen der oberen Bandebene (614) und dem unteren Bandebene (615) des Bandförderers angeordnet ist.

5. Vorrichtung nach einem der Ansprüche 1 bis 4, wobei das erste Identifikationsmodul (65) eine Lichtschrankenvorrichtung (654) zur Feststellung der Anwesenheit beziehungsweise Position eines Objektes, insbesondere einer Liegewareneinheit (2, 3, 31), auf dem Zufördermodul (61) aufweist.

6. Vorrichtung nach einem der Ansprüche 1 bis 5, wobei die Vorrichtung (6) mit einer Steuerungsvorrichtung (701) mit einer Datenbank (702) verbunden ist, und wobei die Steuerungsvorrichtung dazu eingerichtet ist, die Identität eines befüllen Transportbehälters (8, 81) und die Identität der darin eingebrachten Liegewareneinheit (2, 3, 31) in der Datenbank logisch miteinander zu verknüpfen.

7. Vorrichtung nach einem der Ansprüche 1 bis 6, mit einem Bereitstellmodul (64) zum Bereitstellen von Transportbehältern (8, 81), wobei das Bereitstellmodul (64) ein zweites Identifikationsmodul (66) zum Identifizieren von Transportbehältern aufweist.

8. Vorrichtung nach Anspruch 7, wobei das zweite Identifikationsmodul (66) eine optische Detektoreinheit (663) und/oder eine RFID-Leseeinheit umfasst.

9. Vorrichtung nach Anspruch 7 oder 8, wobei das Bereitstellmodul (64) dazu eingerichtet ist, einen Transportbehälter (8, 81) aus einem Fördersystem (9, 91) zu übernehmen, und/oder einen Transportbehälter (8, 81) an ein Fördersystem (9, 91) zu übergeben.

10. Vorrichtung nach einem der Ansprüche 7 bis 9, wobei das Bereitstellmodul (64) dazu eingerichtet ist, einen Transportbehälter (8) in Form einer Hängefördertasche (81) aus einem geschlossenen Zustand in einen geöffneten Zustand zu überführen.

11. Vorrichtung nach einem der Ansprüche 7 bis 10, wobei das Bereitstellmodul (64) dazu eingerichtet ist, einen Transportbehälter (8) in Form einer Hängefördertasche (81) eines Hängefördersystems (91) vor dem Einbringen der Wareneinheit (3) auszurichten.

12. Vorrichtung nach einem der Ansprüche 1 bis 11, mit einem Modul (61) zur Zuförderung eines Gebindes (1) mit einem Trägerstrang (11, 11'), auf welchem eine Mehrzahl von Packungseinheiten (2, 2', 2", 2‴) hintereinander in Reihe angeordnet ist; und
einem Abtrennmodul (62) zum Bereitstellen von Liegewareneinheiten durch das Abtrennen von Packungselementen (2, 2', 2", 2‴) von einem zugeförderten Gebinde (1).

13. Vorrichtung nach einem der Ansprüche 1 bis 12, wobei die Vorrichtung (6) in ein Fördersystem (9, 91) einer Intralogistik-Anlage (7) integriert ist.

14. Verfahren zum Einbringen von Liegewareneinheiten (2, 3, 31) in einen Transportbehälter (8, 81), bei welchem
eine Liegewareneinheit (2, 3, 31) auf einem Zufördermodul (61) bereitgestellt wird;
ein Transportbehälter (8, 81) bereitgestellt wird;
die Liegewareneinheit identifiziert wird;
der Transportbehälter identifiziert wird; und
die Liegewareneinheit in den Transportbehälter eingebracht wird.

15. Verfahren nach Anspruch 14, wobei die Identität der Liegewareneinheit (2, 3, 31) und die Identität des Transportbehälters (8, 81) logisch miteinander verknüpft werden.
